# EUROPEAN PATENT APPLICATION

(11) **EP 3 520 925 A1**
(43) Date of publication of application: **07.08.2019**
(21) Application number: 17855722.9
(22) Date of filing: 13.09.2017
(51) Int. Cl.: B21K 1/08, B21J 5/02, F16C 3/08

(54) **MANUFACTURING METHOD FOR FORGED CRANKSHAFT**

(30) Priority: 27.09.2016 JP 2016187835
(71) Applicant: Nippon Steel Corporation, Tokyo 100-8071 (JP)
(72) Inventor: OKUBO, Junichi, Tokyo 100-8071 (JP); TAMURA, Kenji, Tokyo 100-8071 (JP); YOSHIDA, Kunihiro, Tokyo 100-8071 (JP); HWANG, Sam Soo, Tokyo 100-8071 (JP); NAKANO, Ryusuke, Tokyo 100-8071 (JP); HORI, Masao, Tokyo 100-8071 (JP)
(74) Representative: Zimmermann & Partner Patentanwälte mbB
(86) International application number: PCT/JP2017/032996
(87) International publication number: WO 2018/061765

(57) **Abstract**

Provided is a production method, including a first preforming process for obtaining a first preform from a billet, a second preforming process for obtaining a second preform from the first preform, a final preforming process for obtaining a final preform from the second preform, and a finish forging process for forming the final preform into a finishing dimension of the forged crankshaft by die forging. In the first preforming process, regions to be a pin and a journal are pressed respectively from a direction perpendicular to an axial direction of the billet, thus reducing cross sectional areas of each region and forming a plurality of flat parts. In the second preforming process, the first preform is pressed in the pressing direction, which is a direction perpendicular to decentering direction of a region to be a second pin. In the final preforming process, the second preform is pressed from a direction perpendicular to an axial direction of the second preform, and further a region to be a counterweight and a region to be a crank arm integrally including a counterweight are pressed in the axial direction of the second preform.

## Description

### TECHNICAL FIELD

The present invention relates to a method for producing a crankshaft by hot forging.

### BACKGROUND ART

A crankshaft is essential in a reciprocating engine for an automobile, a motorcycle, an agricultural machine, a ship, or the like to transform reciprocating movement of a piston into rotational movement for deriving power. A crankshaft can be produced either by die forging or casting. When high strength and high rigidity are required for a crankshaft, a crankshaft produced by die forging (hereinafter referred to as a "forged crankshaft") is often used.

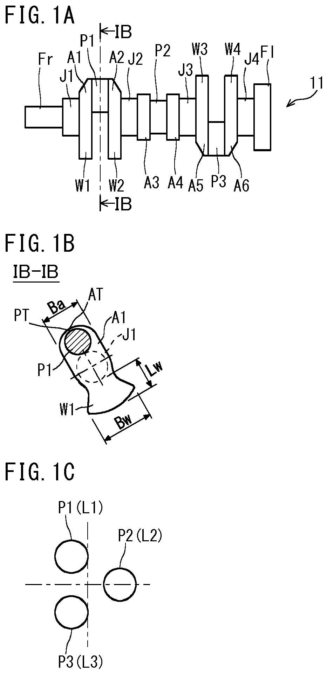

FIGS. 1A to 1C are schematic diagrams to illustrate an exemplary shape of a typical forged crankshaft. Among these figures, FIG. 1A is a general view, FIG. 1B is an IB-IB sectional view, and FIG. 1C is a diagram to show phases of pins. The example shown in FIG. 1B representatively shows one crank arm A1, a counterweight W1 that is integral with the crank arm A1, and a pin P1 and a journal J1, which are connected to the crank arm A1.

The forged crankshaft 11 shown in FIGS. 1A to 1C is a forged crankshaft of 3-cylinder 4-counterweight to be mounted on a 3-cylinder engine. The forged crankshaft 11 includes four journals J1 to J4, three pins P1 to P3, a front part Fr, a flange part Fl, and six crank arms (hereinafter also referred to as "arms") A1 to A6. The arms A1 to A6 connect the journals J1 to J4 with the pins P1 to P3, respectively. Moreover, some arms of the six arms A1 to A6 integrally include counter weights

(hereinafter also referred to as "weights") W1 to W4, respectively. To be specific, the first arm A1, second arm A2, fifth arm A5, and sixth arm A6 integrally include weights W1, W2, W3, and W4, respectively. The third arm A3 and fourth arm A4 do not include any weight and thus have an elongated circular shape.

A front part Fr is provided at a front end in the axial direction of the forged crankshaft 11, and a flange part Fl is provided at a rear end thereof. The front part Fr is connected to the front most first journal J1, and the flange part Fl is connected to the rear most fourth journal J4.

Hereinafter, when collectively referring to the journals J1 to J4, the pins P1 to P3, the arms A1 to A6, and the weights W1 to W4, respectively, their symbols are also denoted as "J" in the journals, "P" in the pins, "A" in the arms, and "W" in the weights. Moreover, the arm A and the weight W that is integral with the arm A are collectively referred to as a "web". An arm A of an elongated circular shape and not having the weight W is also referred to as a "weightless arm".

As shown in FIG. 1C, three pins P1 to P3 are disposed to be deviated from each other by 120° centering on the journal J. That is, the first, second, and third pins P1, P2, and P3 are respectively disposed at a first position L1, second position L2, and third position L3. Mutual phase angles of the first position L1, the second position L2, and the third position L3 are 120°.

As shown in FIG. 1B, a width Bw of the weight W is more than a width Ba of the arm A. Therefore, the weight W largely projects from an arm center plane (plane including center axes of the pin P and the journal).

When producing a forged crankshaft having such shape, in general, a billet is used as the starting material. A section perpendicular to the longitudinal direction of the billet, that is, a cross section thereof has circular or rectangular shape. The area of the cross section is constant over the entire length of the billet. The term "cross section" as used herein means a section perpendicular to the longitudinal direction of the billet or each preform to be described below, or the axial direction of a forged crankshaft. The term "longitudinal section" means a section in parallel with the longitudinal direction or the axial direction. Also, the area of a cross section is simply referred to as a "cross sectional area". A forged crankshaft is produced by performing a preforming process, a die forging process, and a flash-trimming process in that order. Moreover, as required, a coining process is performed after the flash-trimming process. Typically, the preforming process includes a roll forming process and a bend forging process. The die forging process includes a rough forging process and a finish forging process.

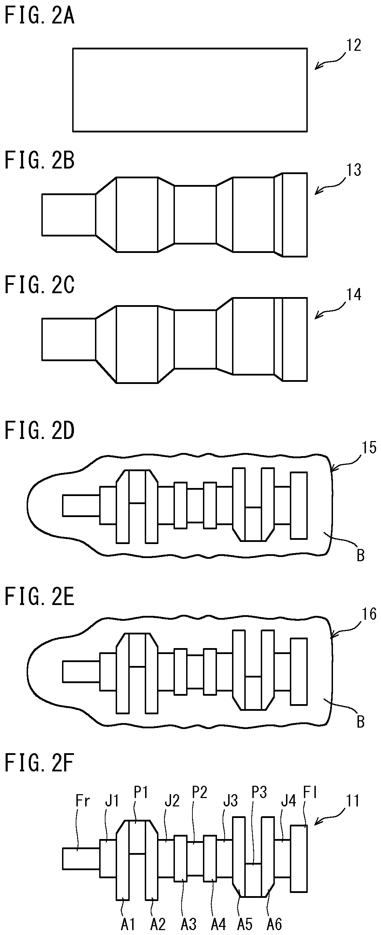

FIGS. 2A to 2F are schematic diagrams to illustrate a conventional production process of a typical forged crankshaft. Among these figures, FIG. 2A shows a billet; FIG. 2B a rolled preform; FIG. 2C a bent preform; FIG. 2D a rough forged preform; FIG. 2E a finish forged preform; and FIG. 2F a forged crankshaft. It is noted that FIGS. 2A to 2F show a series of processes when producing the forged crankshaft 11 shown in FIGS. 1A to 1C.

Referring to FIGS. 2A to 2F, the production method of the forged crankshaft 11 will be described. First, a billet 12 having a predetermined length as shown in FIG. 2A is heated in a heating furnace and thereafter subjected to roll forming and bend forging in that order in the preforming process. In the roll forming process, the billet 12 is rolled by use of, for example, a grooved roll, thereby reducing the cross sectional area. As a result, the volume of the billet 12 is distributed in the axial direction to obtain a rolled preform 13 that is an intermediate starting material (see FIG. 2B). Next, in the bend forging, the rolled preform 13 is partly pressed in a direction perpendicular to the axial direction. As a result, the volume of the rolled preform 13 is distributed to obtain a bent preform 14 that is a further intermediate starting material (see FIG. 2C).

Successively, in the rough forging process, the bent preform 14 is subjected to forging by use of a vertical pair of dies to obtain a rough forged preform 15 (see FIG. 2D). The resulting rough forged preform 15 has an approximate shape of the forged crankshaft (final product) formed thereon. Further, in the finish forging process, the rough forged preform 15 is subjected to forging by use of a vertical pair of dies, to obtain a finish forged preform 16 (see FIG. 2E). The resulting finish forged preform 16 has been formed into a shape corresponding to that of the forged crankshaft as the final product. During the rough forging and finish forging, excess material flows out from between die parting surfaces of mutually opposed dies, forming flash B. As a result, each of the rough forged preform 15 and the finish forged preform 16 has pronounced flash B around its circumference.

In the flash-trimming process, for example, the finish forged preform 16 having flash is held by being sandwiched between a pair of dies, and in that state, the flash B is punched off by use of a tool die. As a result, the flash B is removed from the finish forged preform 16, and thereby a flash-free forged preform is obtained. The flash-free forged preform has an approximately same shape as that of the forged crankshaft 11 as shown in FIG. 2F.

In the coining process, principal parts of the flash-free forged preform are pressed slightly from upward and downward with dies so that the flash-free forged preform is reformed to have the same size and shape as those of the final product. Here, the principal portions of the flash-free forged preform include, for example, shaft portions such as the journals J, the pins P, the front part Fr, and the flange part Fl, and further the arms A and the weights W. Thus, the forged crankshaft 11 is produced. It is noted that when producing a forged crankshaft of 3-cylinder 4-counterweight, a twisting process may be added after the flash-trimming process to adjust the layout angle (a phase angle of 120°) of the pin.

The production process shown in FIGS. 2A to 2F can be applied to various forged crankshafts without being limited to the forged crankshaft of 3-cylinder 4-counterweight as shown in FIGS. 1A to 1C. For example, by a production process similar to that, a forged crankshaft of 3-cylinder 6-counterweight and a forged crankshaft to be mounted on a 4-cylinder engine, a series 6-cylinder engine, a V-type 6-cylinder engine, an 8-cylinder engine, or the like can be produced.

The principal purpose of the preforming process is to distribute the volume of the billet. Therefore, the shape of the forged crankshaft is hardly formed on the preform that is obtained by the preforming process. By distributing the volume of the billet in the preforming process in this way, it is possible to reduce the formation of flash in the following die forging process, thereby improving material yield. Here, the term "material yield" means a fraction (percentage) of the volume of the forged crankshaft (final product) to that of the billet.

Techniques concerning production of a forged crankshaft are disclosed in Japanese Patent Application Publication No. 2001-105087 (Patent Literature 1), Japanese Patent Application Publication No. 02-255240 (Patent Literature 2), and Japanese Patent Application Publication No. 62-244545 (Patent Literature 3). Patent Literature 1 discloses a preforming method using a pair of upper and lower dies. In the preforming method, when a bar-like workpiece is pressed by the upper and lower dies, a part of the workpiece is elongated, and concurrently another part in continuous with that part is off set with respect to the axis. Patent Literature 1 states that since elongation and bending can be performed at the same time, it is possible to decrease the facility cost.

The preforming method of Patent Literature 2 uses a 4-pass high speed rolling facility instead of conventional 2-pass roll forming. In that preforming method, the cross sectional area of a rolled preform is determined according to the distribution of cross sectional areas of the weight, the arm, and the journal of a forged crankshaft (final product). Patent Literature 2 states that this allows improvement of material yield.

In the preforming method of Patent Literature 3, the billet is pressed while being sandwiched by at least two dies that move relative to each other. The rolling of the dies results in distribution of material in the axial direction and the radial direction. As a result, an axially non-symmetric preform according to an approximate shape of the forged crankshaft is formed. Patent Literature 3 states that the axially non-symmetric preform is obtained only by the above described preforming method, thus allowing immediate transition to die forging.

### CITATION LIST

### PATENT LITERATURE

Patent Literature 1: Japanese Patent Application Publication No. 2001-105087
Patent Literature 2: Japanese Patent Application Publication No. 02-255240
Patent Literature 3: Japanese Patent Application Publication No. 62-244545
Patent Literature 4: International Application Publication No. WO2014/091730

### SUMMARY OF INVENTION

### TECHNICAL PROBLEM

In the production of a forged crankshaft, as described above, it is required to reduce formation of flash, thereby improving material yield. In the preforming method according to Patent Literature 1, it is possible to perform, to some extent, distribution of the volume of billet and decentering of a region to be a pin (hereinafter, also referred to as a "pin-corresponding part").

However, the decentering and the distribution of volume of the pin-corresponding part are insufficient, so that flash is largely formed as the formation of the pin proceeds in the following die forging. Further, according to the preforming method of Patent Literature 1, distribution of volume between a region to be a weight, and a region to be an arm, which integrally includes a weight, is not studied, in a region to be a web. For that reason, in the following die forging process, fillability of material becomes insufficient in a weight that largely projects from the center plane of the arm, and under-filling is likely to occur. To prevent under-filling of the weight, it is convenient to increase excess volume in the preform. However, in such a case, material yield will decline. Hereinafter, a region to be a weight is referred to as a "weight-corresponding part". A region to be an arm, which integrally includes a weight but the weight is excluded, is referred to as an "arm-corresponding part". The weight-corresponding part and the arm-corresponding part are also collectively referred to as a "web-corresponding part".

In the preforming method of Patent Literature 2, decentering of a pin-corresponding part is not possible. This is because the method relies on roll forming. Therefore, flash is largely formed when a pin is formed by the following die forging. Moreover, in the preforming method of Patent Literature 2, it is not possible to perform volume distribution between the weight-corresponding part and the arm-corresponding part in the web-corresponding part. This is also because the method relies on roll forming. Therefore, fillability of the material of the weight becomes insufficient in the following die forging process. As a result, under-filling is likely to occur.

According to the technique of Patent Literature 3, it is possible to perform, to some extent, decentering of a pin-corresponding part and distribution of the volume of billet without forming flash. However, special purpose facilities for rolling are required, and the method cannot be practiced conveniently. Moreover, decentering and distribution of volume of the pin-corresponding part are insufficient so that flash is largely formed as formation of the pin proceeds in the following die forging.

It is an objective of the present invention to provide a method for producing a forged crankshaft, which can improve material yield.

### SOLUTION TO PROBLEM

The method for producing a forged crankshaft according to an embodiment of the present invention is a method for producing a forged crankshaft, the forged crankshaft including: four journals each defining a rotation center; three pins each decentered with respect to the journals, the pins being respectively disposed at a first position, a second position, and a third position at a phase angle of 120°; a plurality of crank arms that connect the journals with the pins, respectively; and a plurality of counterweights integrally included in all or some of the crank arms.

The method for producing a forged crankshaft includes: a first preforming process for obtaining a first preform from a workpiece made of a billet or stepped starting material; a second preforming process for obtaining a second preform from the first preform; a final preforming process for obtaining a final preform from the second preform; and a finish forging process for forming the final preform into a finishing dimension of the forged crankshaft by die forging. In the first preforming process, by using a pair of first dies, a region to be a pin and a region to be a journal of a workpiece are pressed from a direction perpendicular to an axial direction of the workpiece. As a result, while cross sectional areas of those regions are decreased thereby forming a plurality of flat parts, a region to be a second pin and to be disposed at a second position of the flat parts is decentered so that the decentering amount of the region to be the second pin will be equal to or less than the decentering amount of finishing dimension. In the second preforming process, by using second dies, the first preform is pressed in a pressing direction, which is a direction perpendicular to the decentering direction of a region to be the second pin. As a result, a region to be a first pin and to be disposed at a first position and a region to be a third pin and to be disposed at a third position are decentered in opposite directions to each other. The decentering amounts of regions to be the first pin and the third pin become equal to or less than (√3)/2 of the decentering amount of the finishing dimension, and thicknesses of a region to be a counterweight, and a region to be a crank arm integrally including a counterweight become larger than the thickness of the finishing dimension. In the final preforming process, by using third dies, the second preform is pressed from a direction perpendicular to an axial direction of the second preform, and further a region to be a counterweight and a region to be a crank arm integrally including the counterweight are pressed from an axial direction of the second preform. As a result, the thicknesses of the region to be a counterweight, and the region to be a crank arm integrally including a counterweight are decreased to the thickness of finishing dimension while maintaining decentering amounts of regions to be first, second, and third pins.

### ADVANTAGEOUS EFFECTS OF INVENTION

The method for producing a forged crankshaft according to an embodiment of the present invention makes it possible to obtain a second preform, in which distribution of volume in an axial direction is enhanced, without forming flash, by a first preforming process and a second preforming process. Moreover, the second preform allows that the volume of a weight-corresponding part and the volume of an arm-corresponding part are appropriately distributed in a web-corresponding part. For that reason, even in the final preforming process, it is possible to obtain a final preform having a shape close to the shape of a forged crankshaft substantially without forming flash. Then, it is possible to form the shape of the forged crankshaft from the final preform by the finish forging process. This allows improvement of material yield.

### BRIEF DESCRIPTION OF DRAWINGS

FIG. 1A is a general view to schematically show an exemplary shape of a typical forged crankshaft.
FIG. 1B is an IB-IB sectional view of FIG. 1A.
FIG. 1C is a diagram to show phases of pins with respect to the forged crankshaft of FIG. 1A.
FIG. 2A is a schematic diagram to show a billet in a conventional production process.
FIG. 2B is a schematic diagram to show a rolled preform in a conventional production process.
FIG. 2C is a schematic diagram to show a bent preform in a conventional production process.
FIG. 2D is a schematic diagram to show a rough forged preform in a conventional production process.
FIG. 2E is a schematic diagram to show a finish forged preform in a conventional production process.
FIG. 2F is a schematic diagram to show a forged crankshaft in a conventional production process.
FIG. 3A is a schematic diagram to show a billet in an exemplary production process of the present embodiment.
FIG. 3B is a schematic diagram to show a first preform in an exemplary production process of the present embodiment.
FIG. 3C is a schematic diagram to show a second preform in an exemplary production process of the present embodiment.
FIG. 3D is a schematic diagram to show a final preform in an exemplary production process of the present embodiment.
FIG. 3E is a schematic diagram to show finish forged preform in an exemplary production process of the present embodiment.
FIG. 3F is a schematic diagram to show a forged crankshaft in an exemplary production process of the present embodiment.
FIG. 4A is a longitudinal sectional view to schematically show a state when pressing is started in an exemplary processing flow of the first preforming process.
FIG. 4B is a longitudinal sectional view to schematically show a state when pressing is ended in an exemplary processing flow of the first preforming process.
FIG. 5A is a cross sectional view to show a region to be a pin and to be disposed at a second position when pressing is started in an exemplary processing flow of the first preforming process.
FIG. 5B is a cross sectional view to show a region to be a pin and to be disposed at a second position when pressing is ended in an exemplary processing flow of the first preforming process.
FIG. 6A is a cross sectional view to show a region to be a journal when pressing is started in an exemplary processing flow of the first preforming process.
FIG. 6B is a cross sectional view to show a region to be a journal when pressing is ended in an exemplary processing flow of the first preforming process.
FIG. 7A is a cross sectional view to show a region to be a web when pressing is started in an exemplary processing flow of the first preforming process.
FIG. 7B is a cross sectional view to show a region to be a web when pressing is ended in an exemplary processing flow of the first preforming process.
FIG. 8A is a longitudinal sectional view to schematically show a state when pressing is started in an exemplary processing flow of the second preforming process.
FIG. 8B is a longitudinal sectional view to schematically show a state when pressing is ended in an exemplary processing flow of the second preforming process.
FIG. 9A is a cross sectional view to show a region to be a pin and to be disposed at a third position when pressing is started in an exemplary processing flow of the second preforming process.
FIG. 9B is a cross sectional view to show a region to be a pin and to be disposed at a third position when pressing is ended in an exemplary processing flow of the second preforming process.
FIG. 10A is a cross sectional view to show a region to be a pin and to be disposed at a second position when pressing is started in an exemplary processing flow of the second preforming process.
FIG. 10B is a cross sectional view to show a region to be a pin and to be disposed at a second position when pressing is ended in an exemplary processing flow of the second preforming process.
FIG. 11A is a cross sectional view to show a region to be a journal when pressing is started in an exemplary processing flow of the second preforming process.
FIG. 11B is a cross sectional view to show a region to be a journal when pressing is ended in an exemplary processing flow of the second preforming process.
FIG. 12A is a cross sectional view to show a region to be a web when pressing is started in an exemplary processing flow of the second preforming process.
FIG. 12B is a cross sectional view to show a region to be a web when pressing is ended in an exemplary processing flow of the second preforming process.
FIG. 13A is a cross sectional view to show a region to be a weightless arm when pressing is started in an exemplary processing flow of the second preforming process.
FIG. 13B is a cross sectional view to show a region to be a weightless arm when pressing is ended in an exemplary processing flow of the second preforming process.
FIG. 14 is a schematic diagram to show decentering amounts of a first pin-corresponding part and a third pin-corresponding part.
FIG. 15A is a longitudinal sectional view to schematically show a state before pressing in an exemplary processing flow of the final preforming process.
FIG. 15B is a longitudinal sectional view to schematically show a state when the upper die has reached a bottom dead center in an exemplary processing flow of the final preforming process.
FIG. 15C is a longitudinal sectional view to schematically show a state when axial movement is ended in an exemplary processing flow of the final preforming process.
FIG. 16 is a schematic diagram to show the posture of a second preform and a die clamping direction by upper lower dies in the final preforming process, the diagram showing the second preform viewed from the axial direction.
FIG. 17A is a cross sectional view to show a state before pressing in a case where pressing is performed from an opening side of a concave web-processing part in the second preforming process.
FIG. 17B is a cross sectional view to show a state when pressing is ended in a case where pressing is performed from an opening side of a concave web-processing part in the second preforming process.
FIG. 18A is a cross sectional view to show a state when pressing is started in a case where a pin-corresponding part is pressed without forming a closed section by a pin-processing part in the second preforming process.
FIG. 18B is a cross sectional view to show a state when pressing is ended in a case where a pin-corresponding part is pressed without forming a closed section by a pin-processing part in the second preforming process.
FIG. 19A is a cross sectional view to show a state when pressing is started in a case where a journal-corresponding part is pressed without forming a closed section by a journal-processing part in the second preforming process.
FIG. 19B is a cross sectional view to show a state when pressing is ended in a case where a journal-corresponding part is pressed without forming a closed section by a journal-processing part in the second preforming process.
FIG. 20A is a cross sectional view to show a state before pressing in an exemplary processing flow in which partial pressing is performed by a journal-processing part in the first preforming process.
FIG. 20B is a cross sectional view to show a state when pressing is ended in an exemplary processing flow in which partial pressing is performed by a journal-processing part in the first preforming process.
FIG. 21 is a schematic diagram to show an exemplary shape of a stepped starting material.
FIG. 22A is a top view to schematically show a state before pressing in the final preforming process of Embodiment 1.
FIG. 22B is a top view to schematically show a state when the upper die has reached the bottom dead center in the final preforming process of Embodiment 1.
FIG. 22C is a top view to schematically show a state when axial movement is ended in the final preforming process of Embodiment 1.
FIG. 23 is a schematic diagram to show the posture of a second preform and a die clamping direction by upper lower dies in the final preforming process of Embodiment 1, the diagram showing the second preform viewed from the axial direction.
FIG. 24A is a schematic diagram to show a first preform in an exemplary production process of Embodiment 2.
FIG. 24B is a schematic diagram to show a second preform in an exemplary production process of Embodiment 2.
FIG. 24C is a schematic diagram to show a final preform in an exemplary production process of Embodiment 2.
FIG. 25A is a longitudinal sectional view to schematically show a state before pressing in the final preforming process of Embodiment 2.
FIG. 25B is a longitudinal sectional view to schematically show a state when the upper die has reached a bottom dead center in the final preforming process of Embodiment 2.
FIG. 25C is a longitudinal sectional view to schematically show a state when axial movement is ended in the final preforming process of Embodiment 2.
FIG. 26 is a longitudinal sectional view to show second dies to be used in a second preforming process of Embodiment 3.
FIG. 27 is a longitudinal sectional view to show second dies to be used in a second preforming process of Embodiment 3.

### DESCRIPTION OF EMBODIMENTS

The method for producing a forged crankshaft according to an embodiment of the present invention is a method for producing a forged crankshaft including four journals, three pins, a plurality of crank arms, and a plurality of counterweights. The four journals define a rotational center. The three pins are decentered with respect to the journals, and are each disposed at a first, second, and third positions located at a phase angle of 120°. The plurality of crank arms connect the journals with the pins, respectively. The plurality of the counterweights are integrally included in all or some of the crank arms, respectively.

The method for producing a forged crankshaft includes a first preforming process, a second preforming process, a final preforming process, and a finish forging process. The first preforming process obtains a first preform from a workpiece made from a billet or a stepped starting material. The second preforming process obtains a second preform from the first preform. The final preforming process obtains a final preform from the second preform. The finish forging process forms the final preform into finishing dimensions of the forged crankshaft by die forging.

In the first preforming process, by using a pair of first dies, a region to be a pin and a region to be a journal of the workpiece are pressed from a direction perpendicular to the axial direction of the workpiece. As a result, while the cross sectional areas of those regions are reduced such that a plurality of flat parts are formed, and among the flat parts, a region to be a second pin and to be disposed at the second position is decentered. The decentering amount of the region to be the second pin is equal to or less than that of the finishing dimension.

In the second preforming process, by using second dies, the first preform is pressed in a pressing direction, which is a direction perpendicular to the decentering direction of the region to be the second pin. As a result, the region to be the first pin and to be disposed at the first position and the region to be the third pin and to be disposed at the third position are decentered in opposite directions to each other. The decentering amounts of the regions to be the first and third pins will be equal to or less than (√3)/2 of the decentering amount of the finishing dimension. The thicknesses of the region to be the counterweight and the region to be the crank arm integrally including the counterweight will be more than the thickness of the finishing dimension.

In the final preforming process, by using the third dies, the second preform is pressed from a direction perpendicular to the axial direction of the second preform, and further the region to be the counterweight and region to be the crank arm integrally including the counterweight are pressed from the axial direction of the second preform. As a result, while maintaining the decentering amounts of the regions to be the first, second, and third pins, the thicknesses of the region to be the counterweight and the region to be the crank arm integrally including the counterweight are decreased to the thickness of the finishing dimension.

In a typical example, when the workpiece is a stepped starting material, the cross sectional areas of the region to be the pin and the region to be the journal are less than a total cross section area of the region to be the counterweight and the region to be the crank arm integrally including the counterweight.

A pair of first dies used in the first preforming process includes a pin-processing part that is to abut against the region to be the pin, and a journal-processing part that is to abut against the region to be the journal. In the first preforming process, the workpiece is pressed by the pin-processing part and the journal-processing part, thereby forming flat parts.

A pair of second dies used in the second preforming process includes a web-processing part that is to abut against the region to be the counterweight and the region to be the crank arm integrally including the counterweight. The web-processing part includes, in either one of the pair of the second dies, an arm-processing part that is to abut against the region to be a crank arm and a weight-processing part that is to abut against the region to be a counterweight. The arm-processing part and the weight-processing part each have a generally concave shape, in which the arm-processing part is located on the concave bottom surface side and the weight-processing part is located on the concave opening side. An opening width of the weight-processing part increases as moving away from the concave bottom surface.

Then, in the second preforming process, as the regions to be the first and third pins are decentered, the region to be the counterweight and the region to be the crank arm integrally including the counterweight are pushed into the bottom surface side of the concave web-processing part, thereby deforming the same.

According to the production method of the present embodiment, it is possible to obtain a second preform in which volume distribution in the axial direction is enhanced without forming flash by the first preforming process and the second preforming process. Moreover, in the second preform, the volume of the weight corresponding part (region to be the weight) and the volume of the arm corresponding part (region to be the arm integrally including the weight (weight is excluded)) are appropriately distributed in a web corresponding part (region to be the weight and the region to be the arm integrally including the weight). For that reason, even in the final preforming process, it is possible to obtain a final preform having a shape closer to that of the forged crankshaft substantially without forming flash. Thus, by the finish forging process, it is possible to create the shape of the forged crankshaft from the final preform. These allow to improve material yield.

Preferably, in the second preforming process, when pushing the weight-corresponding part and the arm-corresponding part into the bottom surface side of the concave web-processing part to deform the same, the weight-corresponding part and the arm-corresponding part are pressed from the opening side of the concave web-processing part to distribute volume.

In the final preforming process, the pressing direction along a direction perpendicular to the axial direction of the second preform by the third dies may be the decentering direction of the region to be the second pin, or a direction perpendicular to the decentering direction of the region to be the second pin.

Hereinafter, the method for producing a forged crankshaft according to the present embodiment will be described with reference to the drawings.

### 1. Exemplary production process

A forged crankshaft to be addressed by the production method of the present embodiment includes four journals J that define a rotational center, three pins P that are decentered with respect to the journals J, and a plurality of arms A that each connect the journals J with the pins P, and a plurality of weights W that are integrally included in all or some of the arms A, respectively. The three pins P1, P2, and P3 are respectively disposed at a first position L1, second position L2, and third position L3. Hereinafter, the pin to be disposed at the first position L1 is also referred to as a first pin P1. The pin to be disposed at the second position L2 is also referred to as a second pin P2. The pin to be disposed at the third position L3 is also referred to as a third pin P3. Mutual phase angles of the first position L1, the second position L2, and the third position L3 are 120°. For example, the forged crankshaft of 3-cylinder 4-counterweight shown in FIGS. 1A to 1C is the target of production.

The method for producing a forged crankshaft according to the present embodiment includes a first preforming process, a second preforming process, a final preforming process, and a finish forging process. A flash-trimming process may be added as a post process of the finish forging process. Moreover, as required, a coining process may be added after the flash-trimming process. The adjustment of the layout angle of the pins can be performed in the finish forging process. Alternatively, a twisting process may be added after the flash trimming process, and adjustment of the layout angle of the pins may be performed by the twisting process. A series of these processes are performed as a hot processing.

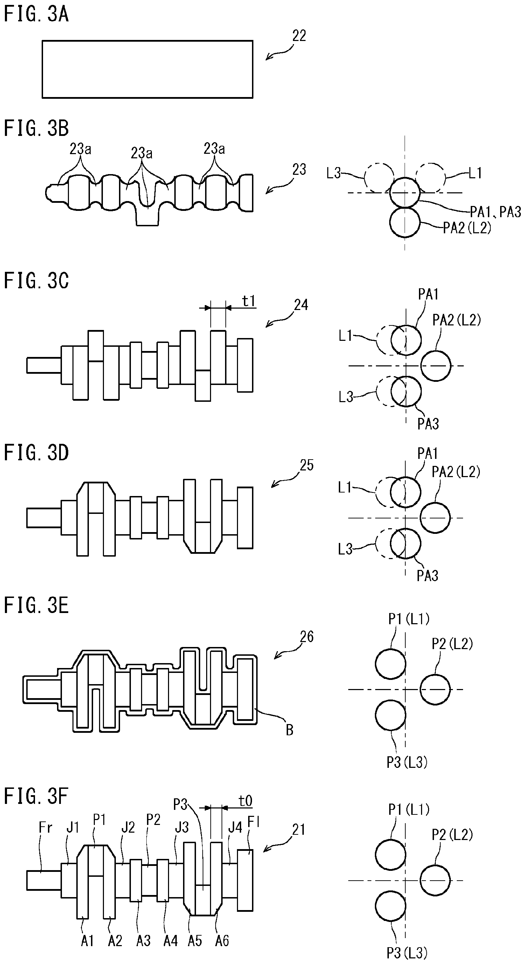

FIGS. 3A to 3F are schematic diagrams to illustrate an exemplary manufacturing process of a forged crankshaft according to the present embodiment. Among these figures, FIG. 3A shows a billet; FIG. 3B a first preform; FIG. 3C a second preform; FIG. 3D a final preform; FIG. 3E a finished forged preform; and FIG. 3F a forged crankshaft. It is noted that FIGS. 3A to 3F show a series of processes when producing a forged crankshaft 11 having the shape as shown in FIGS. 1A to 1C. Each figure on the right hand side of FIGS. 3B to 3D shows positions of regions to be the first, second, and third pins (hereinafter, also referred to as a "first pin-corresponding part", "second pin-corresponding part", and "third pin-corresponding part") PA1, PA2, and PA3 with respect to the center of a region to be the journal (hereinafter, also referred to as a "journal-corresponding part"). The figures on the right hand side of FIGS. 3E and 3F show the positions of the first, second, and third pins P1, P2, and P3 with respect to the center of the journal. Moreover, in each figure on the right hand side of FIGS. 3B to 3D, the first position L1 to the third position L3 of the pin of the forged crankshaft as a final product are shown by an imaginary line.

In the first preforming process, the workpiece is pressed by using the first dies. The pressing direction in that situation is a direction perpendicular to the axial direction of the workpiece. In this example, a billet 22 is used as the workpiece. In this case, the three pin-corresponding parts and the four journal-corresponding parts of the billet 22 are crushed, thereby reducing the cross sectional areas of those regions. Accordingly, a plurality of flat parts 23a are formed in the billet 22. The flat parts 23a are formed at positions of the pin-corresponding parts and the journal-corresponding parts.

Moreover, in the first preforming process, among the flat parts 23a, the second pin-corresponding part PA2 is decentered along the pressing direction. As a result of the pin-corresponding parts and the journal-corresponding parts being reduced, a first preform 23 in which volume is distributed is obtained. Where, the decentering amount of the second pin-corresponding part of the first preform 23 is equal to or less than that of the finishing dimension. The decentering amount of the finishing dimension means the decentering amount of the pin of the forged crankshaft. The first preforming process can be performed according to, for example, an exemplary processing flow to be described below.

In the second preforming process, to further distribute the volume, the first preform 23 is pressed by using a pair of second dies. The pressing direction in such occasion is a direction perpendicular to the decentering direction of the second pin-corresponding part PA2. As a result, a second preform 24 is obtained. In the second preform 24, the first pin-corresponding part PA1 and the third pin-corresponding part PA3 are decentered along the pressing direction. However, the decentering directions of the first pin-corresponding part PA1 and the third pin-corresponding part PA3 are opposite to each other. That is, in the second preform 24, the phase angle between the first pin-corresponding part PA1 and the second pin-corresponding part PA2 is 90°. The phase angle between the third pin-corresponding part PA3 and the second pin-corresponding part PA2 is 90°. Also, the phase angle between the first pin-corresponding part PA1 and the third pin-corresponding part PA3 is 180°.

The decentering amounts of the first and third pin-corresponding parts of the second preform 24 are equal to or less than (√3)/2 of the decentering amount of the finishing dimension. Moreover, in the second preform 24, the thickness t1 (see FIG. 3C) in the axial direction of the web-corresponding part is more than the thickness t0 (see FIG. 3F) of the finishing dimension. The thickness t0 of the finishing dimension means the thicknesses in the axial direction of the arm and the weight of the forged crankshaft (final product). The second preforming process will be described below in detail.

In the final preforming process, the second preform 24 is pressed from a direction perpendicular to the axial direction of the second preform 24 by using the third dies. Further, the web-corresponding part of the second preform 24 is pressed from the axial direction of the second preform 24. As a result, the thickness of the web-corresponding part is decreased to the thickness of the finishing dimension while maintaining the phase angles and the decentering amounts of the first, second, and third pin-corresponding parts PA1, PA2, and PA3. As a result, a final preform 25 in which an approximate shape of the forged crankshaft is formed is obtained. For the final preforming process, for example, the forming apparatus described in International Application Publication No. WO2014/091730 (hereinafter referred to as "Patent Literature 4") can be applied. However, when this apparatus is used, the die member for holding the pin-corresponding part will not move in such a way to cause the pin-corresponding part to be further decentered. An exemplary processing flow of the final preforming process will be described below.

In the finish forging process, the final preform 25 is formed into the finishing dimension of the forged crankshaft by die forging. In specific, a pair of upper and lower dies is used. The final preform 25 is disposed on the lower die in a posture in which the first and third pin-corresponding parts PA1 and PA3 are aligned with each other in a horizontal plane. Then forging is performed by moving the upper die downward. That is, the pressing direction of forging is the decentering direction of the second pin-corresponding part PA2. As a result, as excess material flows out, flash B is formed and a finish forged preform 26 with flash is obtained. In the finish forged preform 26, a shape in accordance with the forged crankshaft as the final product is formed. Since an approximate shape of the forged crankshaft is formed in the final preform 25, it is possible to limit the formation of flash B to a minimum in the finish forging process.

Moreover, in the finish forging process, the first pin-corresponding part PA1 is pushed in in the opposite direction to the decentering direction of the second pin-corresponding part PA2, to reach the first position L1. The third pin-corresponding part PA3 is also pushed in in the opposite direction to the decentering direction of the second pin-corresponding part PA2 to reach the third position L3. As a result, mutual phase angles of the first, second and third pins P1, P2, and P3 are 120°.

In the flash-trimming process, for example, with the finish forged preform 26 with flash being sandwiched between a pair of dies, the flash B is punched off by use of a tool die. Thus, the flash B is removed from the finish forged preform 26. As a result, a forged crankshaft 21 (final product) is obtained.

It is noted that Patent Literature 4 proposes a forming apparatus that forms a starting material for finish forging from a rough starting material in which a rough shape of the forged crankshaft is formed. The rough starting material is obtained by repeatedly subjecting a round billet to reducing rolling, bend forging, or the like. Moreover, in a post process, the starting material for finish forging is subjected to finish forging and flash trimming in that order.

In the production method of the present embodiment, in place of the reducing rolling, the bend forging, or the like in the production process of Patent Literature 4, a first preforming process and a second preforming process are adopted. The final preforming process of the present embodiment corresponds to the forming by the forming apparatus of Patent Literature 4. However, when this apparatus is used, the die member for holding the pin-corresponding part will not move in such a way to cause the pin-corresponding part to be further decentered.

### 2. Exemplary processing flow of first preforming process

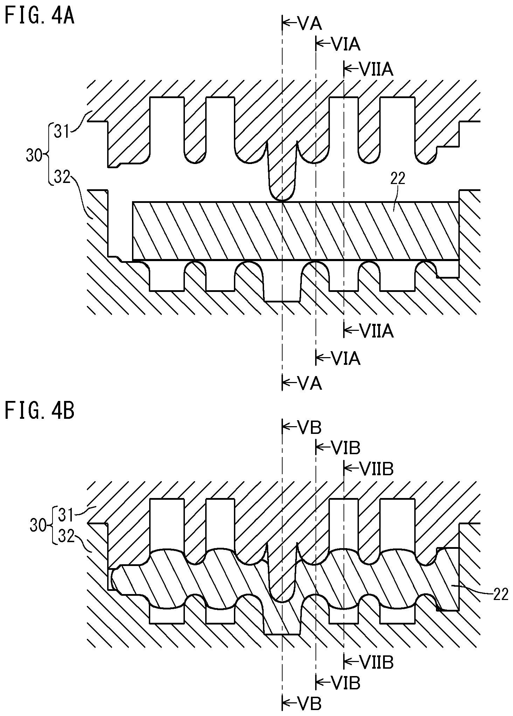

FIGS. 4A to 7B are schematic diagrams to show an exemplary processing flow of the first preforming process. Among these figures, FIG. 4A is a longitudinal sectional view to show a state when pressing is started, and FIG. 4B is a longitudinal sectional view to show a state when pressing is ended.

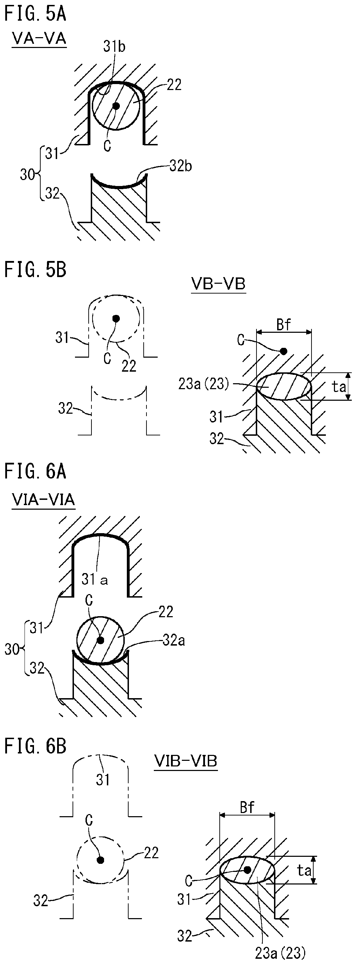

FIGS. 5A and 5B are cross sectional views to show a region to be a pin and to be disposed at the second position (second pin-corresponding part). Among these figures, FIG. 5A shows a state when pressing is started, and FIG. 5B shows a state when pressing is ended. Further, FIG. 5A is a VA-VA sectional view of FIG. 4A, and FIG. 5B is a VB-VB sectional view of FIG. 4B.

FIGS. 6A and 6B are cross sectional views to show a region to be a journal (journal-corresponding part). Among these figures, FIG. 6A shows a state when pressing is started, and FIG. 6B shows a state when pressing is ended. Further, FIG. 6A is a VIA-VIA sectional view of FIG. 4A, and FIG. 6B is a VIB-VIB sectional view of FIG. 4B.

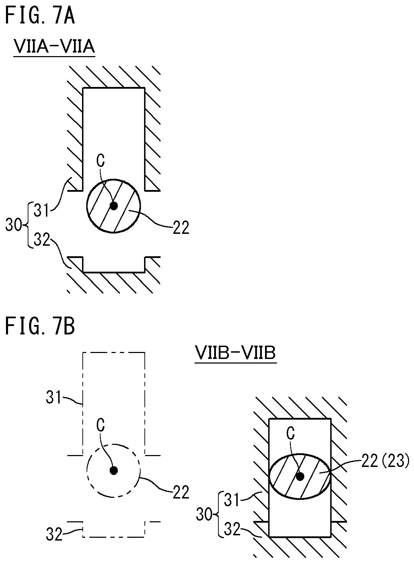

FIGS. 7A and 7B are cross sectional views to show a region to be a web (web-corresponding part). Among these figures, FIG. 7A shows a state when pressing is started, and FIG. 7B shows a state when pressing is ended. Further, FIG. 7A is a VIIA-VIIA sectional view of FIG. 4A, and FIG. 7B is a VIIB-VIIB sectional view of FIG. 4B.

FIGS. 4A to 7B show a billet 22 having a circular cross section, and first dies 30 consisting of a pair of upper and lower dies. The first dies 30 include a first upper die 31 and a first lower die 32. For easy understanding of the state, an axial position C of the journal-corresponding part is indicated by a black circle in FIGS. 5A to 7B. In FIGS. 5B, 6B, and 7B, the first upper die 31, the first lower die 32, and the billet 22 when pressing is started are indicated together by a two-dot chain line. The pair of first dies 30 includes a pin-processing part that is to abut against the pin-corresponding part, and a journal-processing part that is to abut against the journal-corresponding part.

The pin-processing part consists of, as indicated by a thick line in FIG. 5A, an upper-die pin-processing part 31b provided in the first upper die 31, and a lower-die pin-processing part 32b provided in the first lower die 32. The upper-die pin-processing part 31b has a concave shape and can accommodate the billet 22. The lower-die pin-processing part 32b of the first lower die 32 is provided in a front end surface of a convex part. It is noted that there is no limitation on which of the upper-die pin-processing part 31b and the lower-die pin-processing part 32b is formed into a concave shape. That is, the lower-die pin-processing part 32b may have a concave shape that can accommodate the billet.

The pin-processing parts that are to abut against the first and third pin-corresponding parts are similar to the pin-processing part that is to abut against the second pin-corresponding part as shown in FIGS. 5A and 5B. However, in the pressing direction, the positions of the pin-processing parts that are to abut against the first and third pin-corresponding parts are different from the position of the pin-processing part that is to abut against the second pin-corresponding part (see FIGS. 4A and 4B).

The journal-processing part consists of, as shown by a thick line in FIG. 6A, an upper-die journal-processing part 31a provided in the first upper die 31, and a lower-die journal-processing part 32a provided in the first lower die 32. The upper-die journal-processing part 31a has a concave shape, and can accommodate the billet 22. The lower-die journal-processing part 32a is provided in a front end surface of a convex part. It is noted that there is no limitation on which of the upper-die journal-processing part 31a and the lower-die journal-processing part 32a is formed into a concave shape. That is, the lower-die journal-processing part 32a may have a concave shape that can accommodate the billet.

In the first preforming process, the first upper die 31 is moved upward, and with the first upper die 31 and the first lower die 32 being separated, the billet 22 is disposed between the first upper die 31 and the first lower die 32. When the first upper die 31 is moved downward from this state, the pin-corresponding part of the billet 22 is accommodated in the concave upper-die pin-processing part 31b as shown in FIG. 5A. Moreover, as shown in FIG. 6A, the journal-corresponding part is accommodated in the concave upper-die journal-processing part 31a. When the first upper die 31 is further moved downward, the billet 22 is pressed by the upper-die pin-processing part 31b and the lower-die pin-processing part 32b, and the upper-die journal-processing part 31a and the lower-die journal-processing part 32a. Therefore, the cross sectional areas of the pin-corresponding part and the journal-corresponding part will be reduced. As a result, a flat part 23a as shown in FIGS. 5B and 6B is formed.

Moreover, in the pin-processing part and the journal-processing part, the position of the pin-processing part that is to abut against the second pin-corresponding part is, as shown in FIG. 4A, different from the position of the pin-processing part that is to abut against the first and third pin-corresponding parts. For this reason, the second pin-corresponding part is decentered along the pressing direction while being deformed. Then, the decentering amount of the second pin-corresponding part becomes equal to or less than the decentering amount of the finishing dimension. After pressing by the first dies 30 is ended, the first upper die 31 is moved upward, and the processed billet 22 (first preform 23) is taken out.

Adopting such exemplary processing flow, as the pin-corresponding part and the journal-corresponding part are pressed thereby decreasing the cross sectional areas of the pin-corresponding part and the journal-corresponding part, the material of the pin-corresponding part and the journal-corresponding part moves in the axial direction of the billet 22. Because of this, the material flows into the region to be weightless arm (hereinafter, also referred to as a "weightless-arm-corresponding part") between the pin-corresponding part and the journal-corresponding part, and the web-corresponding part. As a result, it is possible to obtain a first preform 23 whose volume is distributed in the axial direction.

Moreover, in the course of moving the first upper die 31 downward, the opening of the concave upper-die pin-processing part 31b is blocked by the lower-die pin-processing part 32b so that a closed section is formed by the upper-die pin-processing part and the lower-die pin-processing part (see FIGS. 5A and 5B). Further, the opening of the concave upper-die journal-processing part 31a is blocked by the lower-die journal-processing part 32a so that a closed section is formed by the upper-die journal-processing part and the lower-die journal-processing part (see FIGS. 6A and 6B). As a result, no flash is formed between the first upper die 31 and the first lower die 32. Therefore, it is possible to improve material yield and enhance axial distribution of volume.

In the first preforming process, as described below, formation of flash may be prevented by partially pressing the journal-corresponding part with the journal-processing part. Moreover, formation of flash may also be prevented by partially pressing the pin-corresponding part with the pin-processing part.

In the first preforming process, it is not necessary to press the web-corresponding part with the first dies in view of enhancing distribution of volume in the axial direction. Moreover, to adjust the shape (dimension) of the web-corresponding part, the web-corresponding part may be partially pressed with the first dies (see FIGS. 7A and 7B).

Moreover, the weightless-arm-corresponding part may be partially pressed with the first dies to adjust its shape (dimension).

In a cross section of the flat part 23a, it is satisfactory that a width Bf in a direction perpendicular to the pressing direction is larger than a thickness ta in the pressing direction. For example, the cross sectional shape of the flat part 23a has an elliptical shape or an elongated circular shape (see FIGS. 5B and 6B). The dimensions of the width Bf and the thickness ta of the flat part 23a may differ in the journal-corresponding part and the pin-corresponding part.

### 3. Exemplary processing flow of second preforming process

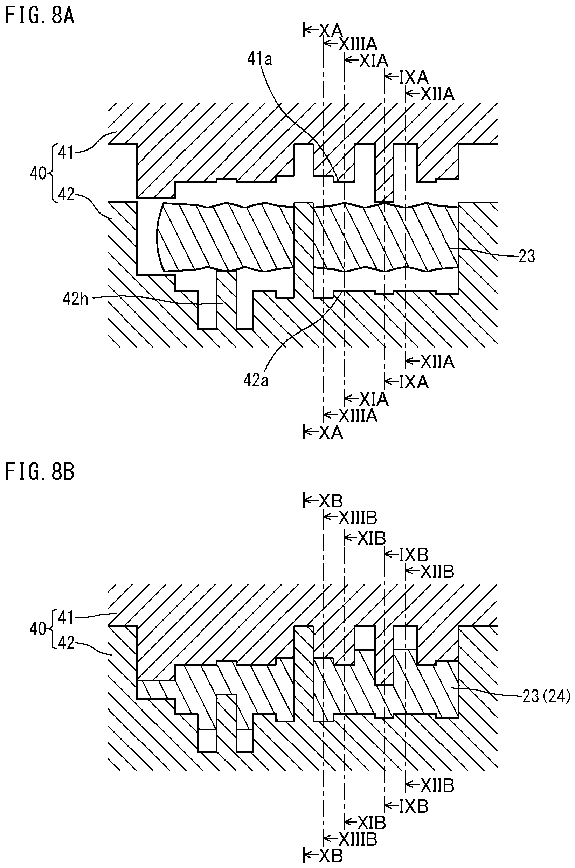

FIGS. 8A to 13B are schematic diagrams to show an exemplary processing flow of the second preforming process. Among these figures, FIG. 8A is a longitudinal sectional view to show a state when pressing is started, and FIG. 8B is a longitudinal sectional view to show a state when pressing is ended.

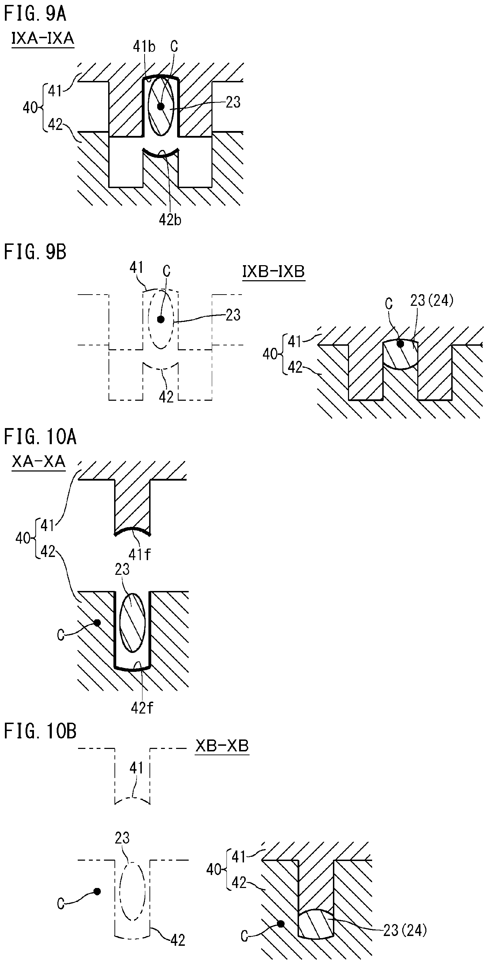

FIGS. 9A and 9B are cross sectional views to show a region to be the third pin (third pin-corresponding part). Among these figures, FIG. 9A shows a state when the pressing is started, and FIG. 9B shows a state when pressing is ended. It is noted that the FIG. 9A is an IXA-IXA sectional view of FIG. 8A and FIG. 9B is an IXB-IXB sectional view of FIG. 8B.

FIGS. 10A and 10B are cross sectional views to show a region to be the second pin (second pin-corresponding part). Among these figures, FIG. 10A shows a state when pressing is started, and FIG. 10B shows a state when pressing is ended. It is noted that the FIG. 10A is an XA-XA sectional view of FIG. 8A and FIG. 10B is an XB-XB sectional view of FIG. 8B.

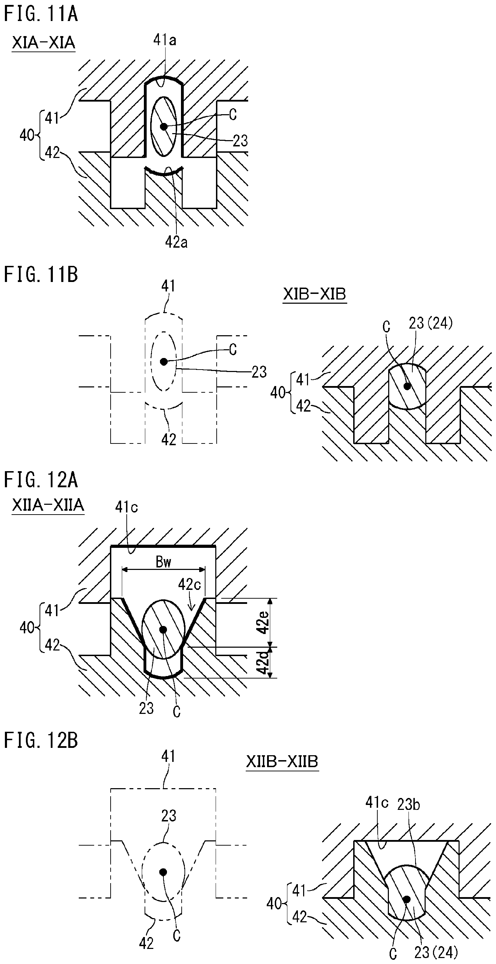

FIGS. 11A and 11B are cross sectional views to show a region to be the journal (journal-corresponding part). Among these figures, FIG. 11A shows a state when pressing is started, and FIG. 11B shows a state when pressing is ended. It is noted that the FIG. 11A is an XIA-XIA sectional view of FIG. 8A and FIG. 11B is an XIB-XIB sectional view of FIG. 8B.

FIGS. 12A and 12B are cross sectional views to show a region to be the web (web-corresponding part). Among these figures, FIG. 12A shows a state when pressing is started, and FIG. 12B shows a state when pressing is ended. It is noted that the FIG. 12A is an XIIA-XIIA sectional view of FIG. 8A, and FIG. 12B is an XIIB-XIIB sectional view of FIG. 8B.

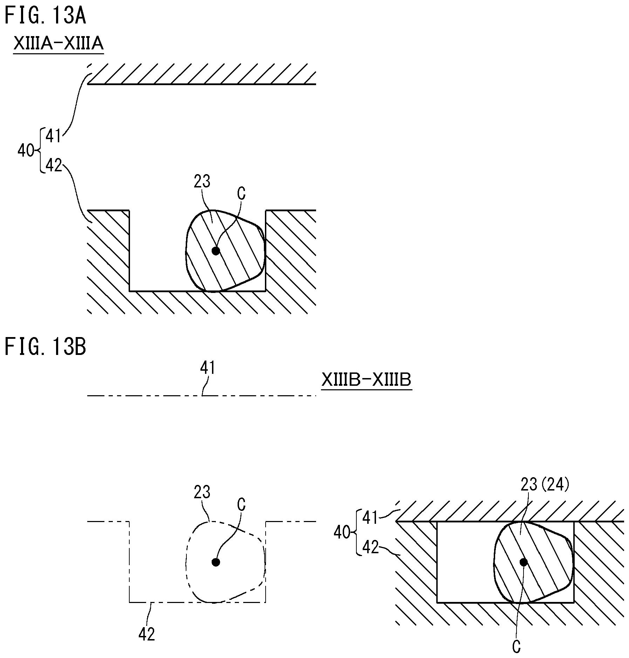

FIGS. 13A and 13B are cross sectional views to show a region to be the weightless arm (weightless-arm-corresponding part). Among these figures, FIG. 13A shows a state when pressing is started, and FIG. 13B shows a state when pressing is ended. It is noted that the FIG. 13A is an XIIIA-XIIIA sectional view of FIG. 8A, and FIG. 13B is an XIIIB-XIIIB sectional view of FIG. 8B.

FIGS. 8A to 13B show first preforms 23 obtained in the above described first preforming process, and second dies 40 consisting of a pair of upper and lower dies. The second dies 40 include a second upper die 41 and a second lower die 42. For easy understanding of the state, the axial position C of the journal-corresponding part is indicated by a black circle in FIGS. 9A to 13B. Moreover, FIGS. 9B, 10B, 11B, 12B, and 13B each show the second upper die 41, the second lower die 42, and the first preform 23 when pressing is started, together by a two-dot chain line. The pair of second dies 40 includes pin-processing parts 41b, 42b, 41f, and 42f that are to abut against the pin-corresponding parts of the first preform 23, journal-processing parts 41a and 42a that are to abut against the journal-corresponding parts, and upper-die web-processing parts 41c and lower-die web-processing parts 42c that are to abut against the web-corresponding parts.

The pin-processing part consists of upper-die pin-processing part 41b, 41f provided in the second upper die 41, and lower-die pin-processing part 42b, 42f provided in the second lower die 42 (see thick lined parts in FIGS. 9A and 10A). The upper-die pin-processing part 41b, 41f has a concave shape and can accommodate the flat part of the first preform 23. It is noted that there is no limitation on which of the upper-die pin-processing part 41b, 41f and the lower-die pin-processing part 42b, 42f is formed into a concave shape. That is, the lower-die pin-processing part 42b, 42f may have a concave shape that can accommodate the billet.

In the third pin-corresponding part, as shown by a thick line in FIG. 9A, the upper-die pin-processing part 41b of the second upper die 41 has a concave shape that can accommodate a flat part of the first preform 23. The lower-die pin-processing part 42b of the second lower die 42 is provided in the front end surface of a convex part. On the other hand, in the second pin-corresponding part, as shown by a thick line in FIG. 10A, the lower-die pin-processing part 42f of the second lower die 42 has a concave shape. The upper-die pin-processing part 41f of the second upper die 41 is provided in the front end surface of a convex part.

In the pressing direction and a direction perpendicular to the pressing direction (decentering direction of the second pin-corresponding part), the position of the pin-processing part that is to abut against the second pin-corresponding part shown in FIGS. 10A and 10B is different from the position of the pin-processing part that is to abut against the third pin-corresponding part shown in FIGS. 9A and 9B. Also, in the pressing direction, the position of the pin-processing part that is to abut against the first pin-corresponding part is different from the position of the pin-processing part that is to abut against the third pin-corresponding part.

The journal-processing part consists of, as shown by a thick line in FIG. 11A, an upper-die journal-processing part 41a provided in the second upper die 41, and a lower-die journal-processing part 42a provided in the second lower die 42. The upper-die journal-processing part 41a has a concave shape and can accommodate a flat part of the first preform 23. The lower-die journal-processing part 42a of the second lower die 42 is provided in a front end surface of a convex part. It is noted that there is no limitation on which of the upper-die journal-processing part 41a and the lower-die journal-processing part 42a is formed into a concave shape. That is, the lower-die journal-processing part 42a may have a concave shape that can accommodate a flat part of the first preform.

The web-processing part consists of, as shown by a thick line in FIG. 12A, a upper-die web-processing part 41c provided in the second upper die 41, and a lower-die web-processing part 42c provided in the second lower die 42. The cross sectional shape of the web-processing part is, as shown by a thick line in FIG. 12A, such that one of the upper-die web-processing part 41c and the lower-die web-processing part 42c has a generally concave shape. For example, as shown in FIG. 12A, the lower-die web-processing part 42c of the second lower die 42 has a generally concave shape, and the other upper-die web-processing part 41c of the second upper die 41 has a plane shape. It is noted that which of the upper-die web-processing part 41c or the lower-die web-processing part 42c is formed into a concave shape can be appropriately set according to the shape of the forged crankshaft.

The concave web-processing part (the lower-die web-processing part 42c in FIB. 12A) has an arm-processing part 42d that is to abut against the region to be the arm (arm-corresponding part), and a weight-processing part 42e that is to abut against the region to be the weight (weight-corresponding part). The arm-processing part 42d is located on the bottom surface side of the concave lower-die web-processing part 42c, and the weight-processing part 42e is located on the opening side of the concave lower-die web-processing part 42c. Moreover, an opening width Bw of the weight-processing part 42e becomes wider as moving away from the bottom surface of the concave lower-die web-processing part 42c. For example, as shown in FIG. 12A, the weight-processing part 42e has an inclined side surface on each side. Moreover, the arm-processing part 42d has parallel side surfaces with the opening width Bw being constant. It is noted that both side surfaces of the arm-processing part 42d do not need to be strictly parallel, permitting a slight inclination.

In the second preforming process, the thickness t1 in the axial direction of the web-corresponding part is processed to be more than the thickness t0 of the finishing dimension (see FIGS. 3C and 3F). For this reason, the lengths in the axial direction of the upper-die web-processing part 41c and the lower-die web-processing part 42c are more than the thickness of the finishing dimension of the web (weight, and arm integrally including the weight).

In the second preforming process, the second upper die 41 is moved upward, and with the second upper die 41 and the second lower die 42 being separated, the first preform 23 is disposed between the second upper die 41 and the second lower die 42. In such occasion, the first preform 23 is disposed in a posture in which it is rotated around the axis by 90° from a state when the first preforming process is ended such that the width direction (longitudinal diameter direction in the case of an ellipse) of the flat part corresponds to the pressing direction. As a result, the pressing direction by the second dies 40 will be a direction perpendicular to the decentering direction of the second pin-corresponding part.

The second upper die 41 is moved downward from this state. Then, as shown in FIGS. 9A, 10A, and 11A, the flat part of the first preform 23 is accommodated in a concave upper-die journal-processing part 41a, and the concave upper-die pin-processing part 41b and the lower-die pin-processing part 42f. In such occasion, as shown in FIG. 12A, the web-corresponding part will not come into contact with the bottom surface of the lower-die web-processing part 42c, and a major part of the web-corresponding part is disposed within the weight-processing part 42e of the lower-die web-processing part.

When the second upper die 41 is further moved downward, in the third pin-corresponding part, a closed section is formed by the upper-die pin-processing part 41b and the lower-die pin-processing part 42b (see FIG. 9A). In the second pin-corresponding part, a closed section is formed by the lower-die pin-processing part 42f and the upper-die pin-processing part 41f (see FIG. 10A). Moreover, a closed section is formed by the upper-die journal-processing part 41a and the lower-die journal-processing part 42a (see FIG. 11A). When the second upper die 41 is further moved downward in this state to reach the a bottom dead center, the flat part (third pin-corresponding part) inside the upper-die pin-processing part 41b and the lower-die pin-processing part 42b is pressed, and the flat part (second pin-corresponding part) inside the lower-die pin-processing part 42f and the upper-die pin-processing part 41f is pressed. Moreover, the flat part inside the upper-die journal-processing part 41a and the lower-die journal-processing part 42a is pressed. In this way, the flat parts of the first preform 23 are pressed by the second dies, resulting in that cross sectional area is reduced in the journal-corresponding part and the pin-corresponding part. Accordingly, excess material flows in the axial direction entering into the web-corresponding part so that the distribution of volume progresses.

Moreover, the third pin-corresponding part is decentered along the pressing direction. The first pin-corresponding part is decentered along the pressing direction toward the opposite side of the third pin-corresponding part. Then, the decentering amounts of the first and third pin-corresponding parts become equal to or less than (√3)/2 of the decentering amount of the finishing dimension. On the other hand, the second pin-corresponding part is located in a direction perpendicular to the pressing direction, and will not be decentered. Therefore, the decentering amount of the second pin-corresponding part remains to be equal to or less than the decentering amount of the finishing dimension.

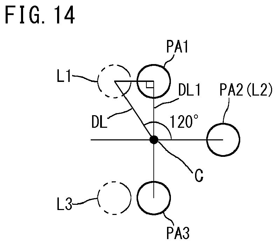

FIG. 14 is a schematic diagram to show decentering amounts of the first pin-corresponding part and the third pin-corresponding part. FIG. 14 shows a forged crankshaft viewed from its axial direction. Referring to FIG. 14, phase difference is 120° between a first position L1 at which the first pin of the forged crankshaft of a 3-cylinder engine is disposed, and a second position L2 at which the second pin is disposed. However, phase difference is 90° between the position PA1 of the first pin-corresponding part and the position PA2 of the second pin-corresponding part of the second preform obtained in the second preforming process. Therefore, the first pin-corresponding part is further decentered with respect to the axial position C of the journal-corresponding part by die forging after the final preforming process. As a result, the phase difference between the first position L1 and the second position L2 is made to be 120° in the forged crankshaft that is the final product.

The decentering amount (finishing dimension) of the first pin is a distance DL between the center of the first position L1 and the axis C of the journal. Therefore, supposing a right-angled triangle consisting of the axial center C of the journal, the center of the position PA1 of the first pin-corresponding part, and the center of the first position L1, decentering amount DL1 of the first pin-corresponding part in the second preforming process is equal to or less than (√3)/2 of the decentering amount DL of the first pin. If the decentering amount DL1 of the first pin-corresponding part in the second preforming process is more than (√3)/2 of the decentering amount DL of the first pin, it is difficult to cause the first pin-corresponding part to be decentered to the first position L1 in the following process. This is because the first pin-corresponding part must be decentered to the first position L1 along a direction that is not parallel with the pressing direction (left and right direction of FIG. 14). It is noted that when the decentering amount DL1 of the first pin-corresponding part is less than (√3)/2 of the decentering amount DL of the first pin, the decentering amount DL1 of the first pin-corresponding part is decentered to (√3)/2 of the decentering amount DL of the first pin in the following die forging process, or the like. The same applies to the third pin-corresponding part. Even for the second pin-corresponding part, when the decentering amount is less than that of the finishing dimension, the second pin-corresponding part is further decentered with respect to the axial position C of the journal-corresponding part in the die forging process after the final preforming process.

While a plane-shaped web-processing part of the web-processing part (upper-die web-processing part 41c in FIGS. 12A and 12B) will not be pushed against the web-corresponding part, the web-corresponding part is pushed into the bottom surface side of the concave lower-die web-processing part 42c. This pushing-in occurs as the first and third pin-corresponding parts that are located in front and back of the web-corresponding part are pressed (deformed). When being pushed in, the web-corresponding part is deformed along the above described arm-processing part 42d and the weight-processing part 42e. That is, the width of the web-corresponding part is narrowed on the concave bottom surface side (arm-corresponding part), and widened on the concave opening side (weight-corresponding part). Moreover, the side surface 23b on the opening side of the web-corresponding part has an arc-shaped cross section.

After pressing by the second dies 40 is ended, the second upper die 41 is moved upward, and the processed first preform (second preform 24) is taken out. In the second preform thus obtained, the thickness of the web-corresponding part is more than thickness of the finishing dimension.

According to the second preforming process, it is possible to cause the first and third pin-corresponding parts to be decentered respectively without forming flash. Moreover, by causing the material to flow from the pin-corresponding part to the web-corresponding part, it is made possible to distribute volume in the axial direction. As required, also causing the material to flow from the journal-corresponding part to the web-corresponding part will also make it possible to distribute the volume in the axial direction.

In the second preforming process, to adjust the shape (dimension) of the weightless-arm-corresponding part, the weightless-arm-corresponding part may be partially pressed by the second dies 40 (see FIGS. 13A and 13B). Moreover, when it is desirable to cause the material to flow into the weightless-arm-corresponding part, the weightless-arm-corresponding part may not be pressed by the second dies 40.

### 4. Exemplary processing flow of final preforming process

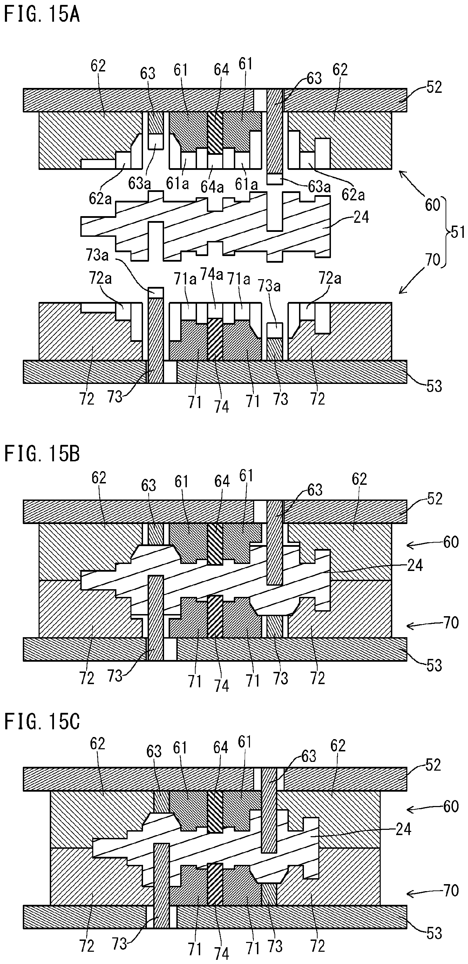

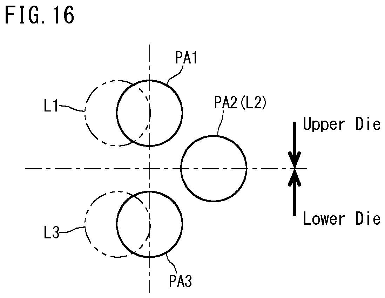

FIGS. 15A to 15C are longitudinal sectional views to schematically show an exemplary processing flow of the final preforming process. Among these figures, FIG. 15A shows a state before pressing; FIG. 15B a state when the upper die has reached the bottom dead center; and FIG. 15C a state when axial movement is ended. FIG. 16 is a schematic diagram to show the posture of a second preform and a die clamping direction by upper and lower dies in the final preforming process, the diagram showing the second preform viewed from the axial direction. It is noted that in FIGS. 15A to 15C, although the actual second pin-corresponding part is located in the front or back of the first and third pin-corresponding parts, for convenience sake, the first to third pin-corresponding parts are shown on the same plane.

FIGS. 15A to 15C show a second preform 24 obtained in the preceding second preforming process, third dies 51 consisting of a pair of upper and lower dies, an upper plate 52, and a lower plate 53. The third dies 51 include a third upper die 60 and a third lower die 70. The third upper die 60 is supported on the upper plate 52. The upper plate 52 moves up and down as a ram (not shown) of a press machine operates. The third lower die 70 is supported on the lower plate 53. The lower plate 53 is fixed onto a foundation (not shown) of the press machine.

To press the web-corresponding part form the axial direction of the second preform 24, the third upper die 60 and the third lower die 70 are divided into a plurality of members. The members constituting the third upper die 60 and the third lower die 70 are disposed in a line along the axial direction of the second preform 24. The third upper die 60 and the third lower die 70 include their respective fixed pin die members 64, 74, a plurality of fixed journal die members 61, 71; a plurality of movable journal die members 62, 72, and a plurality of movable pin die members 63, 73.

The fixed pin die members 64 and 74 are disposed at a position of the second pin-corresponding part at the middle of the second preform 24. The fixed pin die members 64 and 74 are not movable with respect to the upper plate 52 and the lower plate 53, respectively.

The fixed journal die members 61 and 71 are disposed in the front and back in the axial direction of the fixed pin die members 64 and 74, respectively. That is, the fixed journal die members 61 and 71 are respectively disposed at positions of a weightless-arm-corresponding part connecting to the second pin-corresponding part of the second preform 24, the second and third journal-corresponding parts connecting to the weightless-arm corresponding part, and a web-corresponding part connecting to the journal-corresponding part. The fixed journal die members 61 and 71 are not movable with respect to the upper plate 52 and the lower plate 53.

The movable pin die members 63 and 73 are respectively disposed at positions of the first and third pin-corresponding parts of the second preform 24. The movable pin die members 63 and 73 are movable in the axial direction of the second preform 24 and in a direction facing toward the fixed pin die members 64 and 74 (fixed journal die members 61 and 71) on the upper plate 52 and the lower plate 53, respectively. The movable pin die members 63 and 73 are not movable in directions other than the axial directions thereof with respect to the upper plate 52 and the lower plate 53.

The movable journal die members 62 and 72 are respectively disposed at positions of the first and fourth journal-corresponding parts in the second preform 24, and web-corresponding parts connecting to the journal-corresponding parts. It is noted that the movable journal die members 62 and 72 on the fore side are also present at positions of the region to be the front part. The movable journal die members 62 and 72 on the aft side are also present respectively at a position of the region to be the flange part. The movable journal die members 62 and 72 are movable in the axial direction of the second preform 24 and in a direction facing toward the fixed pin die members 64 and 74 (fixed journal die members 61 and 71) on the upper plate 52 and the lower plate 53.

In the third upper die 60 and the third lower die 70 consisting of such members, die-engraved parts (see symbols 61a, 62a, 63a, 64a, 71a, 72a, 73a, and 74a in FIG. 15A) are formed respectively. The die-engraved parts each have a shape reflecting approximate shape of the forged crankshaft (final product).

In the final preforming process, as shown in FIG. 15A, with the third upper die 60 being moved upward, the second preform 24 is disposed between the third upper die 60 and the third lower die 70. In that occasion, as shown in FIG. 16, the second preform 24 is disposed in a posture in which the first and third pin-corresponding parts PA1 and PA3 are aligned in a vertical plane. That is, the second preform 24 is disposed in a posture in which the decentering direction of the second pin-corresponding part PA2 corresponds to a horizontal direction. From this state, the third upper die 60 is moved downward. Then, the second preform 24 is pressed from a direction perpendicular to the axial direction of the second preform 24 (vertical direction) by the third upper die 60 and the third lower die 70 (see FIG. 15B). As a result, the journal-corresponding part, the pin-corresponding part, and the weightless-arm-corresponding part of the second preform 24 are pressed thereby forming approximate shapes of the journal, the pin, and the weightless arm.

Further, the movable journal die members 62 and 72, and the movable pin die members 63 and 73 are moved in the axial direction of the second preform 24, and in a direction facing toward the fixed pin die members 64 and 74. This movement can be realized by, for example, a wedge mechanism or a hydraulic cylinder.

Following axial movement of the movable journal die members 62 and 72, and the movable pin die members 63 and 73, the web-corresponding part of the second preform 24 is pressed in the axial direction of the second preform 24. As a result, the thickness of the web-corresponding part decreases to the thickness of the finishing dimension, and approximate shapes of the arm and the weight are formed. In that occasion, the pin-corresponding part will not move in the decentering direction. That is, the decentering amounts of the first and third pin-corresponding parts are kept to be equal to (√3)/2 of the decentering amount of the finishing dimension. The decentering amount of the second pin-corresponding part is kept to be equal to the decentering amount of the finishing dimension.

After the pressing by the third dies 51 is ended, the upper die 60 is moved upward, and the processed second preform 24 (final preform) is taken out.

According to such final preforming process, as a result of pressing the web-corresponding part in the axial direction, it is possible to improve fillability of material in the weight, thereby restricting the occurrence of under-filling. Moreover, since the fillability of material in the weight is excellent, it is possible to obtain a final preform substantially without forming flash.

According to the production method of the present embodiment, the above described first preforming process and the second preforming process make it possible to obtain a second preform without forming flash. As a result, it is possible to improve material yield.

Further, according to the production method of the present embodiment, it is possible to enhance distribution of volume in the axial direction by the first preforming process and the second preforming process. That is, it is possible to reduce the cross sectional areas of the pin-corresponding part and the journal-corresponding part, and to increase the cross sectional area of the web-corresponding part. Moreover, in the second preforming process, it is possible to make the width of the web-corresponding part narrowed at the arm-corresponding part, and widened at the weight-corresponding part. That is, it is possible to appropriately distribute volume in the web-corresponding part. For this reason, it is possible, in the following final preforming process, to suppress formation of flash and form an approximate shape of the forged crankshaft. Since the final preform in which an approximate shape of the forged crankshaft is formed is used, it is possible to limit the formation of flash to a minimum in the finish forging process as well. These allow improvement of material yield.

### 5. Thickness and volume distribution of web-corresponding part

In the second preforming process, the thickness of the weightless-arm-corresponding part may be more than that of the finishing dimension. In such occasion, in the final preforming process, the weightless-arm-corresponding part is pressed in the axial direction of the second preform. Therefore, the fixed journal die members 61 and 71 to be used in the final preforming process are changed to the movable journal die members.

In the preceding second preforming process, the second die including a web-processing part is used. However, the second preforming process will not be limited to such configuration. For example, even in the second preforming process, similarly to the first preforming process, the material may be flown in from the pin-corresponding part and the journal-corresponding part without pressing the web-corresponding part.

When the second die including a web-processing part is used, the volume distribution in the web-corresponding part by the second preforming process can be adjusted by appropriately changing the shape of the arm-processing part depending on the shape of the forged crankshaft (final product). For example, the opening width of the arm-processing part may be changed, or an inclined surface may be provided in the arm-processing part. It is noted that providing an inclination surface in the arm-processing part makes it possible to smoothly take out the processed first preform (second preform) from the second dies after the end of pressing.

The weight of the forged crankshaft (final product) has various shapes. For example, there is a case in which the weight significantly projects in the width direction, and the length of the pin in the decentering direction is small. In such a case, it is effective to change the shape of the weight-processing part in the second preforming process. Examples of changing the shape of the weight-processing part include adjustment of the angle of the inclination surface, and forming the weight-processing part into a curved surface. Moreover, volume may be distributed in the weight-corresponding part by pressing the web-corresponding part from the opening side of the concave web-processing part.

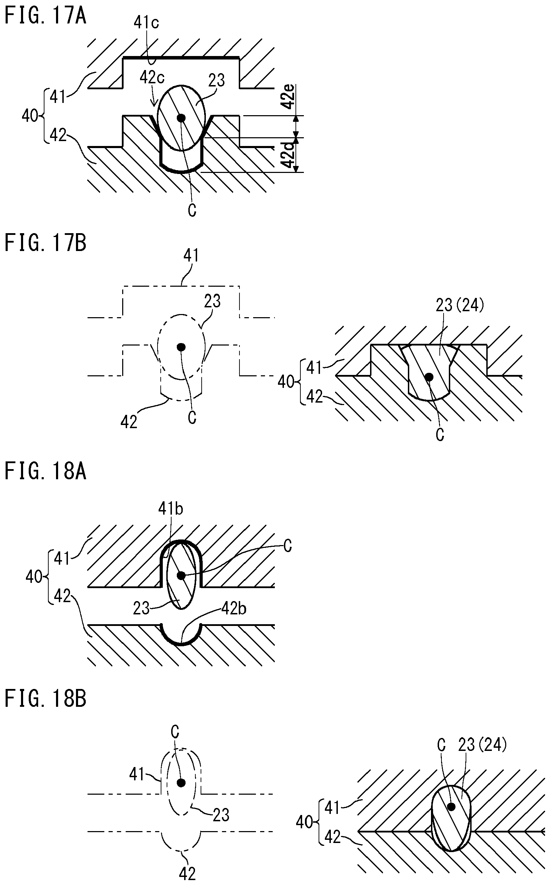

FIGS. 17A and 17B are cross sectional views to show a case in which the region to be the web (web-corresponding part) is pressed from the opening side of the concave lower-die web-processing part. Among these figures, FIG. 17A shows a state before pressing, and FIG. 17B shows a state when pressing is ended. In FIGS. 17A and 17B, the depth of the concave lower-die web-processing part 42c is shallower compared with FIGS. 12A and 12B.

In the exemplary processing flow shown in FIGS. 17A and 17B, similarly to the exemplary processing flow shown in FIGS. 12A and 12B, the web-corresponding part is pushed into the bottom surface side of the concave lower-die web-processing part 42c, and is deformed along the concave lower-die web-processing part 42c. In addition, since the depth of the concave lower-die web-processing part 42c is shallow, in the final stage of pressing by the second dies, the plane-shaped upper-die web-processing part 41c is pushed against the side surface on the opening side of the web-corresponding part. As a result, the web-corresponding part is pressed from the opening side of the concave lower-die web-processing part 42c so that the width is widened and the length in the decentering direction decreases. As a result, volume is distributed in the weight-corresponding part.

When the side surface on the opening side of the web-corresponding part is pressed in this way, in view of preventing that the flowing in of the material into the web-corresponding part is hindered, it is preferable to perform light pressing. Light pressing can be realized by, for example, pressing a part of the side surface 23b (see FIG. 12B) on the opening side of the web-corresponding part. In this case, the material is released to a region that will not come into contact with the die, thus resulting in light pressing.

### 6. Alternative aspect of second preforming process

In the preceding second preforming process, the pin-corresponding part is pressed in a state in which a closed section is formed by the upper-die pin-processing part and the lower-die pin-processing part. However, if no flash is formed, the pin-corresponding part may be pressed without forming a closed section by the pin-processing part.

FIGS. 18A and 18B are cross sectional views to show a case in which the pin-corresponding part is pressed by the pin-processing part without forming a closed section. Among these figures, FIG. 18A shows a state when pressing is started, and FIG. 18B shows a state when pressing is ended. The shapes of the upper-die pin-processing part 41b and the lower-die pin-processing part 42b shown in FIGS. 18A and 18B are different from the shapes of the upper-die pin-processing part 41b and the lower-die pin-processing part 42b shown in FIGS. 9A and 9B. The upper-die pin-processing part 41b of the second upper die 41 and the lower-die pin-processing part 42b of the second lower die 42 shown in FIGS. 18A and 18B are both concave shaped. The depth of the upper-die pin-processing part 41b of the second upper die 41 is more than that of the lower-die pin-processing part 42b of the second lower die 42.

According to such upper-die pin-processing part 41b and lower-die pin-processing part 42b, as the second upper die 41 moves down, a major part of the third pin-corresponding part (flat part) of the first preform 23 is accommodated in the upper-die pin-processing part 41b of the second upper die 41. When the second upper die 41 is further moved downward in that state, the third pin-corresponding part (flat part) is decentered along the pressing direction. In that occasion, the upper-die pin-processing part 41b of the second upper die 41 and the lower-die pin-processing part 42b of the second lower die 42 both partially abut against the pin-corresponding part. In other words, the upper-die pin-processing part 41b and the lower-die pin-processing part 42b do not abut against the pin-corresponding part around the die-parting plane. Moreover, as the pin-corresponding part is decentered, the material flows out in the axial direction, and the pin-corresponding part is reduced, thus decreasing the cross sectional area. Therefore, it is possible to cause the pin-corresponding part to be decentered and reduced without forming flash.

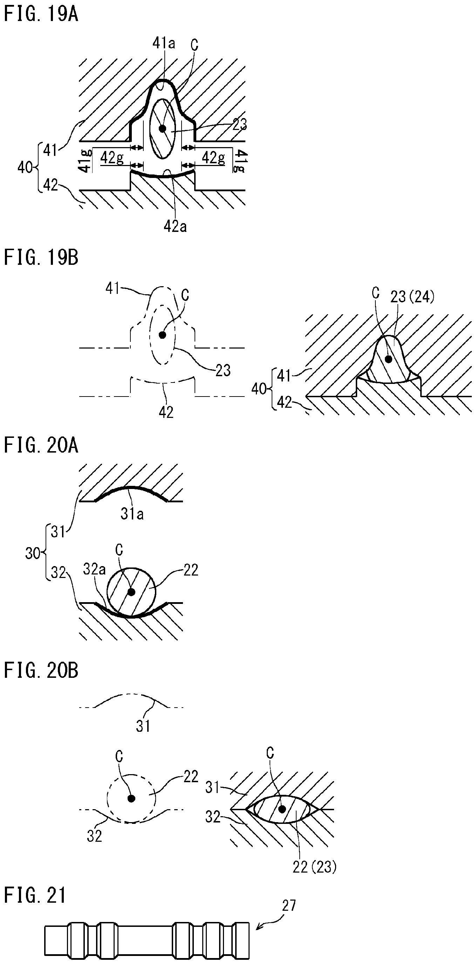

When it is desirable to enhance the distribution of volume in the second preforming process, it is preferable to press the pin-corresponding part with a closed section being formed by the first and second pin-processing parts. In view of preventing finning, it is preferable that the pin-corresponding part is partially pressed by the pin-processing part. When performing partial pressing to prevent formation of flash, the shape of the journal-processing part shown in FIG. 19 below may be utilized as the shape of the pin-processing part.

In the above described second preforming process, the journal-corresponding part is also pressed with a closed section being formed by the upper-die journal-processing part and the lower-die journal-processing part. However, if flash is not formed, the journal-corresponding part may be pressed without forming a closed section by the journal-processing part. For example, the shape of the pin-processing part as shown in FIGS. 18A and 18B may be utilized as the shape of the journal-processing part.

FIGS. 19A and 19B are cross sectional views to show a case in which the journal-corresponding part is pressed without forming a closed section by the journal-processing part. Among these figures, FIG. 19A shows a state when pressing is started, and FIG. 19B shows a state when pressing is ended. The shapes of the upper-die journal-processing part 41a and the lower-die journal-processing part 42a shown in FIGS. 19A and 19B are different from those of the upper-die journal-processing part 41a and the lower-die journal-processing part 42a shown in FIGS. 11A and 11B. In the upper-die journal-processing part 41a and the lower-die journal-processing part 42a shown in FIGS. 19A and 19B, the upper-die journal-processing part 41a of the second upper die 41 has a concave shape that can accommodate the whole of the flat part of the first preform 23 (see a thick line of FIG. 19A). Moreover, the lower-die journal-processing part 42a on the circular arc of the second lower die 42 is provided in the front end surface of a convex part (see a thick line of FIG. 19A). The upper-die journal-processing part 41a and the lower-die journal-processing part 42a respectively include relief parts 41g and 42g at both ends in the width direction, and the relief parts 41g and 42g spread in the width direction.

According to such upper-die journal-processing part 41a and lower-die journal-processing part 42a, as the second upper die 41 is moved down, the whole of the flat part of the first preform 23 is accommodated in the concave upper-die journal-processing part 41a. When the second upper die 41 is further moved down in that state, the upper-die journal-processing part 41a comes into abutment against the flat part, and next the lower-die journal-processing part 42a comes into abutment against the flat part. As a result of the abutment, the flat part is pressed, thereby decreasing the cross sectional area, and the material flows out in the axial direction, thus distributing volume. In such occasion, while some of the material flows into the relief parts 41g and 42g, parts of the relief parts 41g and 42g will not come into abutment against the flat part. Therefore, the flat part is partially pressed, and no flash is formed.

When it is desirable to enhance the distribution of volume in the second preforming process, it is preferable to press the journal-corresponding part with a closed section being formed by the upper-die journal-processing part and the lower-die journal-processing part. In view of preventing finning, it is preferable that the journal-corresponding part is partially pressed by the upper-die journal-processing part and the lower-die journal-processing part.

### 7. Alternative aspect of first preforming process

In the above described first preforming process, the first dies 30 are used to form a closed section with the upper-die journal-processing part 31a and the lower-die journal-processing part 32a. Moreover, a closed section is formed with the upper-die pin-processing part 31b and the lower-die pin-processing part 32b. And in that state, the entire circumferences of the journal-corresponding part and the pin-corresponding part of the billet are pressed. This makes it possible to prevent formation of flash. The formation of flash may be prevented by partially pressing the journal-corresponding part with the journal-processing part. Moreover, the formation of flash may be prevented by partially pressing the pin-corresponding part with the pin-processing part.

FIGS. 20A and 20B are cross sectional views to show an exemplary processing flow to perform partial pressing by the journal-processing part in the first preforming process. Among these figures, FIG. 20A shows a state before pressing, and FIG. 20B shows a state when pressing is ended. The shapes of the upper-die journal-processing part 31a and the lower-die journal-processing part 32a shown in FIGS. 20A and 20B are different from the shapes of the upper-die journal-processing part 31a and the lower-die journal-processing part 32a shown in FIGS. 6A and 6B. As shown in a thick line in FIG. 20A, both of the upper-die journal-processing part 31a and the lower-die journal-processing part 32a have a concave shape and the same depth.

According to such upper-die journal-processing part 31a and lower-die journal-processing part 32a, as the first upper die 31 is moved down, deepest parts of the upper-die journal-processing part 31a and the lower-die journal-processing part 32a come into abutment against the billet 22. With the first upper die 31 being further moved down in that state, the upper-die journal-processing part 31a and the lower-die journal-processing part 32a both partially come into abutment against the billet 22. In other words, the upper-die journal-processing part 31a and the lower-die journal-processing part 32a do not abut against the billet 22 around the die-parting plane. As a result, it is possible to decrease the cross sectional area and form a flat part without forming flash.

When it is desirable to enhance the distribution of volume, it is preferable to press the entire billet with a closed section being formed by the journal-processing part as shown in FIGS. 6A and 6B. In view of preventing finning, it is preferable that the billet is partially pressed by the journal-processing part as shown in FIGS. 20A and 20B.

The pin-processing part of the first dies, though not shown, may adopt a similar configuration to that of the journal-processing part as shown in FIGS. 20A and 20B, and partially press the billet. In view of enhancing the distribution of volume, it is preferable that the entire billet is pressed with a closed section being formed with the pin-processing part as shown in FIGS. 5A and 5B. In view of preventing finning, it is preferable that the billet is partially pressed by the pin-processing part.

### 8. Preferable aspects, etc.

In view of decreasing flash formed in post processes, it is preferable that the cross sectional area Sp2 (mm²) of the pin-corresponding part of the second preform is 0.7 to 1.9 in its ratio (Sp2/Sp0) with respect to the cross sectional area Sp0 (mm²) of the pin of the forged crankshaft (final product). From the same viewpoint, the cross sectional area Sp1 (mm²) of the pin-corresponding part of the first preform is preferably 0.9 to 1.9 in its ratio (Sp1/Sp0) with respect to the cross sectional area Sp0 (mm²) of the pin of the forged crankshaft (final product).

The amount (mm) by which the second pin-corresponding part is to be decentered by the first preforming process, that is, the decentering amount Ea (mm) of the second pin-corresponding part of the first preform 23, the second preform 24 and the final preform 25 is preferably not less than 20% of the decentering amount of the finishing dimension (decentering amount of the pin-corresponding part of the forged crankshaft) E0 (mm). It is more preferably not less than 50% of, and most preferably 100% of, the decentering amount E0 of the finishing dimension. If the decentering amount Ea of the second pin-corresponding part is less than the decentering amount E0 of the finishing dimension, it is necessary to cause the second pin-corresponding part to be further decentered by the finish forging after the final preforming process. For that reason, a flaw may occur. In the above described embodiment, a case in which the decentering amount Ea of the second pin-corresponding part is the same as (100% of) the decentering amount E0 of the finishing dimension is shown.

The amount by which the first and third pin-corresponding parts are decentered by the second preforming process, that is, the decentering amount Eb (mm) of the first and third pin-corresponding parts of the second preform 24 and the final preform 25 are preferably equal to or less than (√3)/2 of the decentering amount E0 (mm) of the finishing dimension. The above described embodiment shows a case in which the decentering amount Eb of the first and third pin-corresponding parts is equal to (√3)/2 of the decentering amount E0 of the finishing dimension. However, in view of ensuring the fillability of material into the engraved part for pin, the decentering amounts Eb of the first and third pin-corresponding parts of the final preform 25 is preferably not less than (1.0 - Dp/2/((√3)/2×E0)) in its ratio (Eb/((√3)/2×E0)) with respect to the decentering amount E0 of the finishing dimension. Where, Dp means a diameter of the pin of the finishing dimension (diameter of the pin of a forged crankshaft). From the same viewpoint, the cross sectional area Spb (mm²) of the first and third pin-corresponding parts of the final preform 25 are preferably not less than 0.7 and not more than 1.5 in its ratio ((Spb)/Sp0) with respect to the cross sectional area Sp0 (mm²) of the pin of forged crankshaft, and more preferably not less than 0.75 and not more than 1.1.

In view of improving the fillability of material of the weight in post processes, in the second preforming process, the thickness t1 (mm) of the web-corresponding part of the second preform is not less than 1.1, and more preferably not less than 1.5 in its ratio (t1/t0) with respect to the finish dimension t0 (mm). On the other hand, when the ratio (t1/t0) is more than 3.5, a bulge deformation area of material surface increases, and the dimensional accuracy of the outer periphery of the arm may deteriorate. For that reason, the ratio (t1/t0) is preferably not more than 3.5.

In view of preventing under-filling of the weight while ensuring fillability of the material of the weight in post processes, the cross sectional area Sw2 (mm²) of the web-corresponding part of the second preform is preferably 0.3 to 0.9 in its ratio (Sw2/Sw0) with respect to the cross sectional area Sw0 (mm²) of the web of the forged crankshaft (final product). From the same viewpoint, the cross sectional area Sw1 (mm²) of the web-corresponding part of the first preform is preferably 0.2 to 0.8 in its ratio (Sw1/Sw0) with respect to the cross sectional area Sw0 (mm²) of the web of the forged crankshaft (final product). Where, the cross sectional area Sw1 of the web-corresponding part is a total of the cross sectional area of the arm-corresponding part and the cross sectional area of the weight-corresponding part. Moreover, the cross sectional area Sw0 of the web is a total of the cross sectional area of the weight and the cross sectional area of the arm that is integrally included in the weight.

In view of decreasing flash formed in the post processes, the cross sectional area Sj2 (mm²) of the journal-corresponding part of the second preform is preferably 1.0 to 1.9 in its ratio (Sj2/Sj0) with respect to the cross sectional area Sj0 (mm²) of the journal of the forged crankshaft (final product). From the same viewpoint, the cross sectional area Sj1 (mm²) of the journal-corresponding part of the first preform is preferably 1.2 to 1.9 in its ratio (Sj1/Sj0) with respect to the cross sectional area Sj0 (mm²) of the forged crankshaft (final product).

In the exemplary production process shown in FIG. 3A to 3F, although the workpiece is a billet 22, the workpiece may be a stepped starting material.

FIG. 21 is a schematic diagram to show an exemplary shape of a stepped starting material. In the stepped starting material 27 shown in FIG. 21, similarly to the first preform 23 shown in FIG. 3B, the pin-corresponding part and the journal-corresponding part are reduced compared with the web-corresponding part. That is, the cross sectional areas of the pin-corresponding part and the journal-corresponding part are less than the cross sectional area of the web-corresponding part. The stepped starting material 27 is different from the first preform 23 shown in FIG. 3B in that none of the pin-corresponding parts is decentered. The stepped starting material 27 can be formed by using, for example, a reducer roll or a cross roll.

When such a stepped starting material is used as the workpiece, in the first preforming process, the stepped starting material is pressed by a pair of first dies as described above. In specific, the pin-corresponding part is pressed by the pin-processing part to further decrease the cross sectional area of the pin-corresponding part, thus forming a flat part. Moreover, the journal-corresponding part is pressed by the journal-processing part to further decrease the cross sectional area of the journal-corresponding part, thus forming a flat part. Further, the second pin-corresponding part is decentered.

### 9. Other embodiments

### [Embodiment 1]

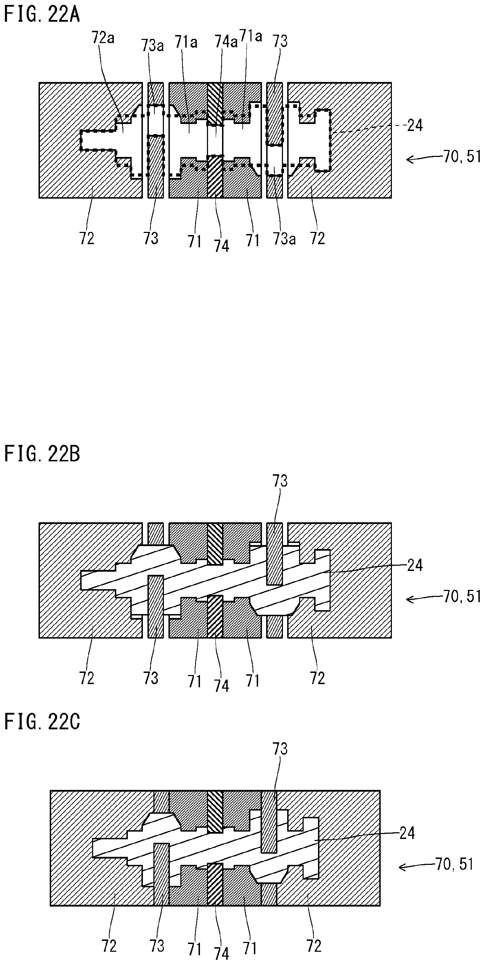

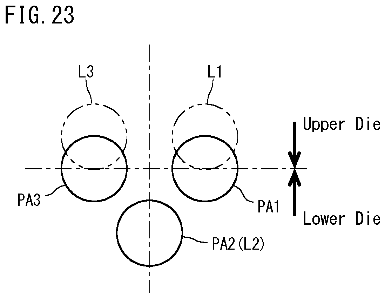

FIGS. 22A to 22C are top views to schematically show the final preforming process in the production method of Embodiment 1. Among these figures, FIG. 22A shows a state before pressing; FIG. 22B a state when the upper die has reached a bottom dead center; and FIG. 22C a state when axial movement is ended. FIG. 23 is a schematic diagram to show a posture of the second preform and the die clamping direction of the upper and lower dies in the final preforming process of Embodiment 1, the diagram showing the second preform viewed from the axial direction. The production method of Embodiment 1 is different in the form of the third dies used in the final preforming process compared with embodiments shown in FIGS. 3A to 21. Other configurations are the same as those of the above described embodiment. For easy understanding of the state, FIGS. 22A to 22C show a third lower die 70 of the third dies 51 consisting of the third upper die and the third lower die. FIG. 22A shows a profile of the second preform 24 by a dotted line. FIGS. 22B and 22C do not show flash.

In the above described embodiment, as shown in FIG. 15A and FIG. 16, the second preform 24 is disposed on the third lower die 70 in a posture in which the first and third pin-corresponding parts PA1 and PA3 are aligned in a vertical plane. For that reason, if the third upper die 60 and the third lower die 70 are die-clamped by downward movement of the third upper die 60 as shown in FIG. 15B, the journal-corresponding part and the pin-corresponding part are pressed along the decentering direction of the first and third pin-corresponding parts PA1 and PA3.

In contrast to this, in Embodiment 1, as shown in FIG. 22A and FIG. 23, the second preform 24 is disposed on the third lower die 70 in a position in which the first and third pin-corresponding parts PA1 and PA3 are aligned in a horizontal plane. For that reason, if the third upper die and the third lower die 70 are die-clamped by the downward movement of the third upper die as shown in FIG. 22B, the journal-corresponding part and the pin-corresponding part are pressed from a direction perpendicular to the decentering direction of the first and third pin-corresponding parts PA1 and PA3 (decentering direction of the second pin-corresponding part PA2).

In this way, in the final preforming process of Embodiment 1, the posture of the second preform 24 is such that the first and third pin-corresponding parts PA1 and PA3 are aligned in a horizontal plane. This posture is the same as that of the final preform in the following finish forging process. For that reason, the position of the flash to be formed in the final preforming process and the position of the flash to be formed in the finish forging process correspond to each other. Therefore, even if flash is formed in the final preforming process, the flash is joined to the flash to be formed in the finish forging process, and is removed in the next flash-trimming process.

### [Embodiment 2]

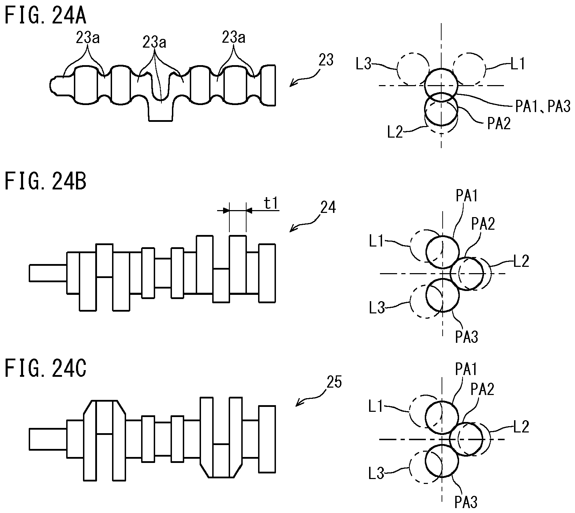

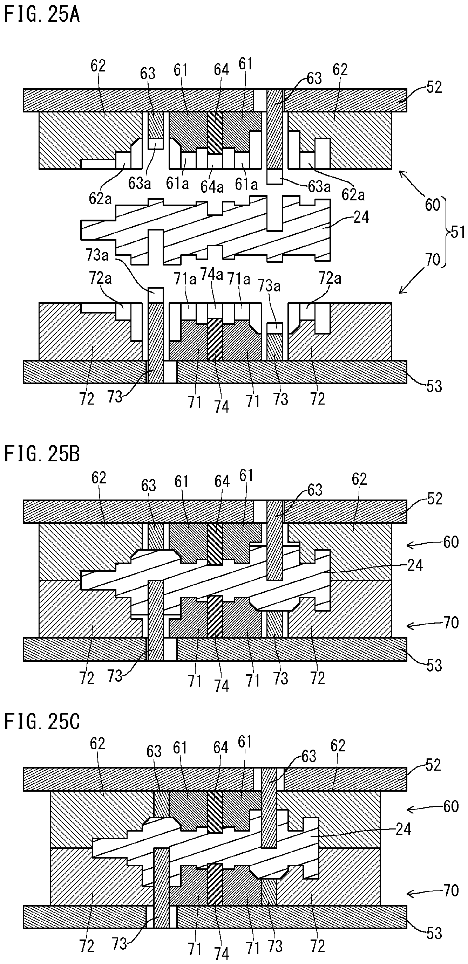

FIGS. 24A to 24C are schematic diagrams to illustrate an exemplary production process of a forged crankshaft of Embodiment 2. Among these figures, FIG. 24A shows a first preform; FIG. 24B a second preform; and FIG. 24C a final preform. FIGS. 25A to 25C are longitudinal sectional views to schematically show the final preforming process in the production method of Embodiment 2. Among these figures, FIG. 25A shows a state before pressing; FIG. 25B a state when the upper die has reached a bottom dead center; and FIG. 25C a state when axial movement is ended. The production method of Embodiment 2 is, compared with the embodiment shown in FIGS. 3A to 21, different in the form of the first preform 23 obtained in the first preforming process. There is difference in the form of the second preform 24 obtained in the second preforming process. Further, there is difference in the form of the final preform 25 obtained in the final preforming process. Other configurations are the same as those of the above described embodiment. The second preform 24 in the final preforming process has such a posture as that the first and third pin-corresponding parts are aligned in a vertical plane.

As shown in FIGS. 24B and 25A, the decentering amount of the second pin-corresponding part PA2 of the second preform 24 is less than the decentering amount of the finishing dimension. The decentering amounts of the first and third pin-corresponding parts PA1 and PA3 are less than (√3)/2 of the decentering amount of the finishing dimension. In the first preforming process, the first preform 23 is formed such that the decentering amount of the second pin-corresponding part PA2 is such a decentering amount (see FIG. 24A). In the second preforming process, the second preform 24 is formed such that the decentering amounts of the first and third pin-corresponding parts PA1 and PA3 are such decentering amounts. Then, in the final preforming process, as in the above described embodiment, the pin-corresponding parts will not move in the decentering direction. For that reason, as shown in FIGS. 24C, 25B, and 25C, the decentering amount of the pin-corresponding parts of the final preform 25 is not different from the decentering amount of the pin-corresponding parts of the second preform 24. That is, the decentering amount of the second pin-corresponding part of the final preform 25 is less than the decentering amount of the finishing dimension. The decentering amount of the first and third pin-corresponding parts PA1 and PA3 are less than (√3)/2 of the decentering amount of the finishing dimension.

Next, in the finish forging process, the final preform 25 is disposed on the lower die in a posture in which the first and third pin-corresponding parts are aligned in a horizontal plane. Then, forging is performed by downward movement of the upper die. Therefore, in a stage when the final preform 25 is disposed on the lower die, the second pin-corresponding part of the final preform 25 is floated up from the engraved part for pin, which is formed in the lower die. This is because the decentering amount of the second pin-corresponding part of the final preform 25 is less than the decentering amount of the finishing dimension. Even in such a state, the downwardly moving upper die comes into contact with the second pin-corresponding part, and as a result of this, the pin-corresponding part is pushed into the engraved part for pin of the lower die. Therefore, the second pin having the decentering amount of the finishing dimension is obtained.

Moreover, in a stage when the final preform 25 is disposed on the lower die, the first and third pin-corresponding parts of the final preform 25 are deviated from the engraved part for pin formed in the lower die. This is because the decentering amounts of the first and third pin corresponding parts of the final preform 25 are less than (√3)/2 of the decentering amount of the finishing dimension. Even in such a state, the downwardly moving upper die comes into contact with the first and third pin-corresponding parts, and as a result of this, those pin-corresponding parts are pushed into the engraved part for pin of the lower die. Therefore, the first and third pins having the decentering amount of the finishing dimension are obtained.

As the second dies to be used in the final preforming process of Embodiment 2, the second dies having a configuration as that of Embodiment 1 may be adopted.

### [Embodiment 3]

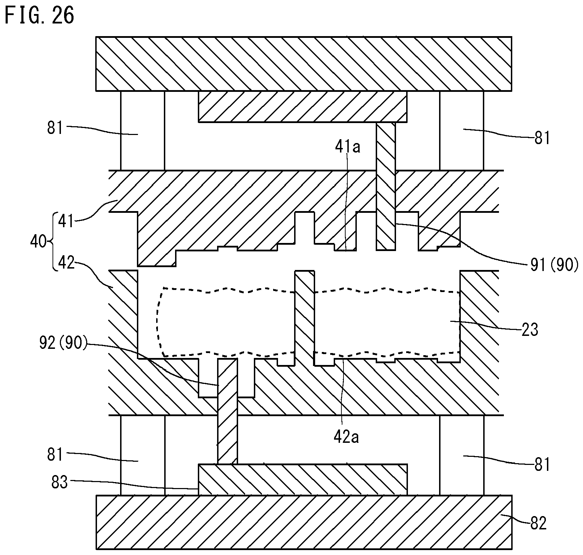

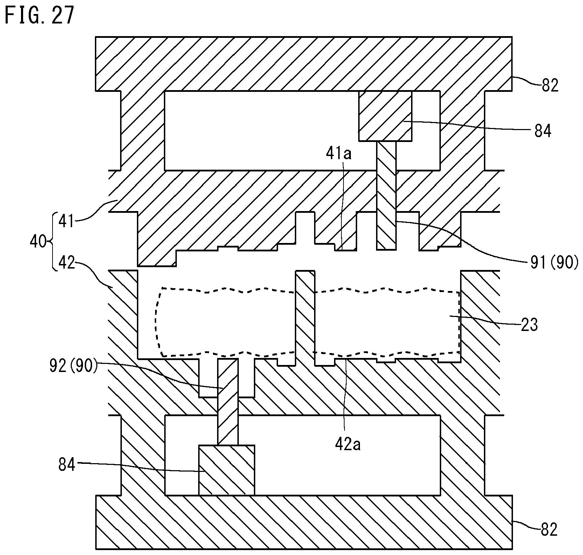

FIGS. 26 and 27 are sectional views to show the second dies to be used in the second preforming process of Embodiment 3. The second preforming process of Embodiment 3 is different in the configuration of the second dies to be used in the second preforming process compared with the embodiment shown in FIGS. 3A to 21.

In Embodiments 1 and 2 described above, the following problems may arise. Referring to FIG. 8A, the first preform 23 is disposed on the second lower die 42 with the second upper die 41 and the second lower die 42 being separated. As described above, in the second preforming process, the first pin-corresponding part and the third pin-corresponding part are to be decentered. The lower-die pin-processing part 42h, which processes the first pin-corresponding part of the first preform 23, projects further than the lower-die journal-processing part 42a. Therefore, when the first preform 23 is disposed on the second lower die 42, the first preform 23 will be inclined. If in this state, the second dies 40 press the first preform 23, the first preform 23 is likely to move in the axial direction since the first preform 23 is inclined. If the first preform 23 moves during pressing, the position of the first preform 23, which is to be pressed by the second dies 40, will be deviated from a predetermined position. That is, a situation such as that the pin-processing part of the second dies 40 presses the web-corresponding part of the first preform 23 may occur. For that reason, under-filling or the like may occur in the second preform after pressing.

Referring to FIGS. 26 and 27, the production apparatus of Embodiment 3 includes a fourth lower die 92 in place of the lower-die pin-processing part 42h. The fourth lower die 92 can move upward and downward independently from the second dies 40. Before pressing of the first preform 23, the fourth lower die 92 is disposed at the same height as or at a lower point than the lower-die journal-processing part 42a is. That is, the fourth lower die 92 does not project further than the lower-die journal-processing part 42a. Therefore, even if the first preform 23 is disposed on the second lower die 42 before starting pressing, the first preform 23 is kept approximately horizontal.

Moreover, in Embodiment 3, pressing of the first preform 23 by the fourth lower die 92 is started at the same time as the pressing of the first preform 23 by the lower-die journal-processing part 42a, or after starting the pressing of the first preform 23 by the lower-die journal-processing part 42a. Therefore, while the first pin-corresponding part is pressed, the journal-corresponding part of the first preform 23 is pressed by the upper-die journal-processing part 41a and the lower-die journal-processing part 42a. That is, the journal-corresponding part of the first preform 23 is restricted by the upper-die journal-processing part 41a and the lower-die journal-processing part 42a.

In short, since the fourth lower die 92 independently moves upward and downward, and the journal-corresponding part of the first preform 23 is pressed concurrently with, or preceding to, the pin-corresponding parts, the first preform 23 is not likely to move in the axial direction during the pressing of the pin-corresponding parts. As a result, the first preform 23 in which volume is distributed is pressed at a predetermined position of the second dies 40, and therefore under-filling or the like is not likely to occur in the second preform after pressing. The same applies to the third pin-corresponding parts. That is, the production apparatus of Embodiment 3 includes fourth dies 90 that consist of a fourth lower die 92 to press the first pin-corresponding part, and a fourth upper die 91 to press the third pin-corresponding part.

The configurations of the second dies 40 and the fourth dies 90 of Embodiment 3 will be described. The fourth dies 90 include a control mechanism for causing the pin-processing parts to be independently moved upward and downward. The control mechanism is, for example, a die cushion and a hydraulic cylinder.

Referring to FIG. 26, a case in which the control mechanism is a die cushion 81 will be described. The second lower die 42 is supported by a bolster base 82 via the die cushion 81. The die cushion 81 has a cushioning function. The fourth lower die 92 is supported by the bolster base 82 via a pin base 83. When the second lower die 42 starts pressing the first preform 23, the fourth lower die 92 starts projecting from the second lower die 42 due to the cushioning function of the die cushion 81. The die cushion 81 is set such that the fourth lower die 92 comes into abutment against the pin-corresponding part of the first preform 23 concurrently, or after, the upper-die journal-processing part 41a and the lower-die journal-processing part 42a abut against the journal-corresponding part of the first preform 23. As a result, the pin-corresponding part of the first preform 23 will be pressed concurrently with the journal-corresponding part, or after the pressing of the journal-corresponding part is started.

Referring to FIG. 27, a case in which the control mechanism is a hydraulic cylinder 84 will be described. The hydraulic cylinder 84 can move the fourth lower die 92 upward and downward. The fourth lower die 92 is supported by the bolster base 82 via the hydraulic cylinder 84. Then the second lower die 42 starts pressing the first preform 23, the hydraulic cylinder is activated, and the fourth lower die 92 starts projecting from the second lower die 42. The hydraulic cylinder 84 is set such that the fourth lower die 92 abuts against the pin-corresponding parts of the first preform 23 concurrently, or after, the upper-die journal-processing part 41a and the lower-die journal-processing part 42a abut against the journal-corresponding part of the first preform 23. As a result, the pin-corresponding part of the first preform 23 will be pressed concurrently with the journal-corresponding part, or after the pressing of the journal-corresponding part is started.

In either case in which the control mechanism is a die cushion or a hydraulic cylinder, the timing that the fourth lower die 92 projects from the second lower die 42 is appropriately set. That is, the pin-corresponding part of the first preform 23 may be pressed concurrently with the pressing of the journal-corresponding part. The pin-corresponding part may be pressed within a period from the start to the end of pressing of the journal corresponding part. Also the pin-corresponding part may be pressed after the pressing of the journal-corresponding part is completed.

The same applies to the fourth upper die 91. Therefore, detailed description of the fourth upper die 91 will be omitted.

Moreover, it goes without saying that the present embodiment will not be limited to the above described embodiments, and can be modified in various ways within a range not departing from the spirit of the present invention.

### INDUSTRIAL APPLICABILITY

The present invention can be effectively used for producing a forged crankshaft to be mounted on a 3-cylinder reciprocating engine.

### REFERENCE SIGNS LIST

21: Forged crankshaft
22: Billet
23: First preform
23a: Flat part
23b: Side surface on opening side of web-corresponding part
24: Second preform
25: Final preform
26: Finish forged preform
27: Stepped starting material
30: First die
31: First upper die
31a: Upper-die journal-processing part
31b: Upper-die pin-processing part
32: First lower die
32a: Lower-die journal-processing part
32b: Lower-die pin-processing part
40: Second die
41: Second upper die
41a: Upper-die journal-processing part
41b: Upper-die pin-processing part (third pin-corresponding part)
41c: Upper-die web-processing part
41f: Upper-die pin-processing part (second pin-corresponding part)
41g: Relief part
42: Second lower die
42a: Lower-die journal-processing part
42b: Lower-die pin-processing part (third pin-corresponding part)
42c: Lower-die web-processing part
42d: Arm-processing part
42e: Weight-processing part
42f: Lower-die pin-processing part (second pin-corresponding part)
42g: Relief part
51: Third die
52: Upper plate
53: Lower plate
60: Third upper die
61: Fixed journal die member
62: Movable journal die member
63: Movable pin die member
64: Fixed pin die member
70: Third lower die
71: Fixed journal die member
72: Movable journal die member
73: Movable pin die member
74: Fixed pin die member
90: Fourth die
91: Fourth upper die
92: Fourth lower die
A, A1 to A6: Crank arm
J, J1 to J4: Journal
P, P1 to P3: Pin
W, W1 to W4: Counterweight
PA, PA1 to PA3: Pin-corresponding part
B: Flash

## Claims

1. A production method of a forged crankshaft, the forged crankshaft including:
four journals each defining a rotation center; three pins each decentered with respect to the journals, the pins being respectively disposed at a first position, a second position, and a third position at a phase angle of 120°; a plurality of crank arms that connect the journals with the pins, respectively; and a plurality of counterweights integrally included in all or some of the crank arms, the production method comprising:
a first preforming process for obtaining a first preform from a workpiece made of a billet or stepped starting material;
a second preforming process for obtaining a second preform from the first preform;
a final preforming process for obtaining a final preform from the second preform; and
a finish forging process for forming the final preform into a finishing dimension of the forged crankshaft by die forging, wherein
in the first preforming process, by using a pair of first dies, a region to be the pin and a region to be the journal of the workpiece are pressed from a direction perpendicular to an axial direction of the workpiece, so that while a cross sectional area of each of the regions is decreased thereby forming a plurality of flat parts, a region to be a second pin and to be disposed at the second position of the flat parts is decentered such that the decentering amount of the region to be the second pin becomes equal to or less than the decentering amount of the finishing dimension; wherein
in the second preforming process, by using second dies, the first preform is pressed in a pressing direction, which is a direction perpendicular to decentering direction of a region to be the second pin, so that a region to be a first pin and to be disposed at the first position and a region to be a third pin and to be disposed at the third position are decentered in opposite directions to each other such that the decentering amounts of regions to be the first pin and the third pin become equal to or less than (√3)/2 of the decentering amount of the finishing dimension, and thicknesses of a region to be the counterweight and a region to be a crank arm integrally including the counterweight become larger than a thickness of the finishing dimension; and wherein
in the final preforming process, by using third dies, the second preform is pressed from a direction perpendicular to an axial direction of the second preform, and further a region to be the counterweight and a region to be a crank arm integrally including the counterweight are pressed from an axial direction of the second preform such that the thicknesses of the region to be the counterweight and the region to be the crank arm integrally including the counterweight are decreased to the thickness of finishing dimension while maintaining decentering amounts of regions to be the first, second, and third pins.

2. The method for producing a forged crankshaft according to claim 1, wherein
in the final preforming process, the pressing direction along the direction perpendicular to the axial direction of the second preform by the third dies is the decentering direction of a region to be the second pin.
